# EUROPEAN PATENT SPECIFICATION

(11) **EP 3 038 343 B1**
(45) Date of publication and mention of the grant of the patent: **17.03.2021**
(21) Application number: 14852189.1
(22) Date of filing: 24.07.2014
(51) Int. Cl.: G06F 3/0487, G06F 1/16, G06F 3/01, G06F 3/044, G06F 3/0482, H04N 5/232

(54) **INFORMATION PROCESSING DEVICE, IMAGING SYSTEM, METHOD FOR CONTROLLING INFORMATION PROCESSING DEVICE AND PROGRAM**
INFORMATIONSVERARBEITUNGSVORRICHTUNG, BILDGEBUNGSSYSTEM, VERFAHREN ZUR STEUERUNG DER INFORMATIONSVERARBEITUNGSVORRICHTUNG UND PROGRAMM
DISPOSITIF DE TRAITEMENT D'INFORMATIONS, SYSTÈME D'IMAGERIE, PROCÉDÉ DE COMMANDE DE DISPOSITIF DE TRAITEMENT D'INFORMATIONS ET PROGRAMME

(30) Priority: 07.10.2013 JP 2013210118; 18.11.2013 JP 2013237988
(43) Date of publication of application: 29.06.2016
(73) Proprietor: Sony Corporation, Tokyo 108-0075 (JP)
(72) Inventor: ITO, Ryogo, Tokyo 108-0075 (JP); ESHITA, Shiro, Tokyo 108-0075 (JP); TAKAGI, Megumi, Tokyo 108-0075 (JP); AKAMATSU, Kazuma, Tokyo 108-0075 (JP); YAMAMOTO, Ayumi, Tokyo 108-0075 (JP)
(74) Representative: D Young & Co LLP
(86) International application number: PCT/JP2014/069547
(87) International publication number: WO 2015/052974

(56) References cited:
- JP-A- 2003 032 520
- JP-A- 2004 080 519
- JP-A- 2013 013 063
- US-A1- 2005 212 948
- US-A1- 2010 208 434
- US-A1- 2012 307 079
- US-A1- 2013 141 640
- US-B1- 7 957 765

## Description

### Technical Field

The present technology relates to an information processing apparatus and an imaging apparatus. In detail, it relates to an information processing apparatus, an imaging apparatus, and an imaging system which perform a control related to an imaging operation, control methods of these, and programs for causing these methods to be executed by a computer.

### Background Art

In related art, imaging apparatuses such as digital still cameras and digital video cameras (for example, a camera-integrated recorder) are widespread, which generate an image (image data) by capturing a photographic subject, and record this image as a content. Further, wireless communication technology exists where an exchange of various types of data is performed by using wireless communication.

Further, technology exists where an imaging apparatus is operated by another apparatus by using wireless communication. For example, an electronic device has been proposed, when a contact operation is detected for an operation switch image displayed in a display unit, for causing an operation, which corresponds to the operation switch image for which this contact operation is performed, to be executed in an imaging apparatus (for example, refer to Patent Literature 1).

### Citation List

Patent Literature 1: JP 2009-94591A

US 2010/208434 describes a mobile terminal having detachable sub-module.

US 2012/307079 considers an imaging apparatus and imaging system.

US 2005/212948 relates to a camera system and camera body.

US 2013/141640 describes a digital photographing system and method of operating digital photographing system.

### Summary of Invention

### Technical Problem

In the above described related art, since an imaging apparatus can be operated by an electronic device by using wireless communication, the imaging apparatus can be operated by using the electronic device, for example, even in the case where the imaging apparatus and the electronic device are separated.

Here, for example, it is assumed that an imaging operation is performed, in an information processing apparatus capable of operating an imaging apparatus by using wireless communication, by attaching this imaging apparatus. In this case, it is assumed that the use states of the imaging apparatus and the information processing apparatus will be different compared to the case where performing an imaging operation by setting to a location separated from the imaging apparatus. Accordingly, in the case where an imaging operation is performed by using an imaging apparatus and an information processing apparatus, it will be important to provide an appropriate user interface in accordance with these use states.

The present technology is created by considering such a situation, and an object of the present technology is to provide an appropriate user interface corresponding to a use state of an apparatus.

### Solution to Problem

The present technology is created to solve the above-described problem.

Aspects of the present technique are set out in the attached claims.

### Advantageous Effects of Invention

The present technology can accomplish a superior effect such as being able to provide an appropriate user interface corresponding to a use state of an apparatus. Note that, the effect described here is not necessarily limited, and may be any effect described within the present disclosure.

### Brief Description of Drawings

[FIG. 1] FIG. 1 is a figure which shows an external appearance configuration of an imaging apparatus 100 in a first embodiment of the present technology.
[FIG. 2] FIG. 2 is a figure which shows an external appearance configuration of the case where the imaging apparatus 100 is attached to an information processing apparatus 200 in a first embodiment of the present technology.
[FIG. 3] FIG. 3 is a figure which shows an external appearance configuration of the case where the imaging apparatus 100 is attached to the information processing apparatus 200 in a first embodiment of the present technology.
[FIG. 4] FIG. 4 is a block diagram which shows a function configuration example of the imaging apparatus 100 and the information processing apparatus 200 in a first embodiment of the present technology.
[FIG. 5] FIG. 5 is a figure which shows a use example of the imaging apparatus 100 and the information processing apparatus 200 in a first embodiment of the present technology.
[FIG. 6] FIG. 6 is a figure which shows a switching example of a display screen displayed in an input-output unit 240 in a first embodiment of the present technology.
[FIG. 7] FIG. 7 is a figure which shows a display example of a display screen displayed in the input-output unit 240 in a first embodiment of the present technology.
[FIG. 8] FIG. 8 is a figure which shows a display example of a display screen displayed in the input-output unit 240 in a first embodiment of the present technology.
[FIG. 9] FIG. 9 is a figure which shows a display example of a display screen displayed in the input-output unit 240 in a first embodiment of the present technology.
[FIG. 10] FIG. 10 is a flow chart which shows an example of a process procedure of a display control process by the information processing apparatus 200 in a first embodiment of the present technology.
[FIG. 11] FIG. 11 is a flow chart which shows an example of a process procedure of an attachment position determination process by the information processing apparatus 200 in a first embodiment of the present technology.
[FIG. 12] FIG. 12 is a figure which shows a display example of a display screen displayed in the input-output unit 240 in a second embodiment of the present technology.
[FIG. 13] FIG. 13 is a figure which shows a display example of a display screen displayed in the input-output unit 240 in a second embodiment of the present technology.
[FIG. 14] FIG. 14 is a figure which shows a display example of a display screen displayed in the input-output unit 240 in a second embodiment of the present technology.
[FIG. 15] FIG. 15 is a flow chart which shows an example of a process procedure of a display control process by the information processing apparatus 200 in a second embodiment of the present technology.
[FIG. 16] FIG. 16 is a block diagram which shows a function configuration example of an imaging apparatus 101 and the information processing apparatus 200 in a third embodiment of the present technology.
[FIG. 17] FIG. 17 is a figure which shows a relationship example between the posture of the imaging apparatus 101 and a captured image generated by the imaging apparatus 101 in a third embodiment of the present technology.
[FIG. 18] FIG. 18 is a figure which shows a transition example of a live view image and operation objects displayed in the input-output unit 240 in a third embodiment of the present technology.
[FIG. 19] FIG. 19 is a figure which shows a display example of a display screen displayed in the input-output unit 240 in a third embodiment of the present technology.
[FIG. 20] FIG. 20 is a figure which shows a display example of a display screen displayed in the input-output unit 240 in a third embodiment of the present technology.
[FIG. 21] FIG. 21 is a figure which shows a display example of a display screen displayed in the input-output unit 240 in a third embodiment of the present technology.
[FIG. 22] FIG. 22 is a flow chart which shows an example of a process procedure of a display control process by the information processing apparatus 200 in a third embodiment of the present technology.

### Description of Embodiments

Hereinafter, the modes for executing the present technology (hereinafter, called the embodiments) will be described. Note that, the description will be given in the following order.
1. First embodiment (example where a display state of a display screen is switched based on a distance between an imaging apparatus and an information processing apparatus)
2. Second embodiment (example where a display state of a display screen is switched based on an attachment position of an imaging apparatus)
3. Third embodiment (example where switching of a display state is controlled based on a change in the posture of an information processing apparatus, based on the presence or absence of mounting of an imaging apparatus and an information processing apparatus)

### <1. First embodiment

### [External appearance configuration of the imaging apparatus]

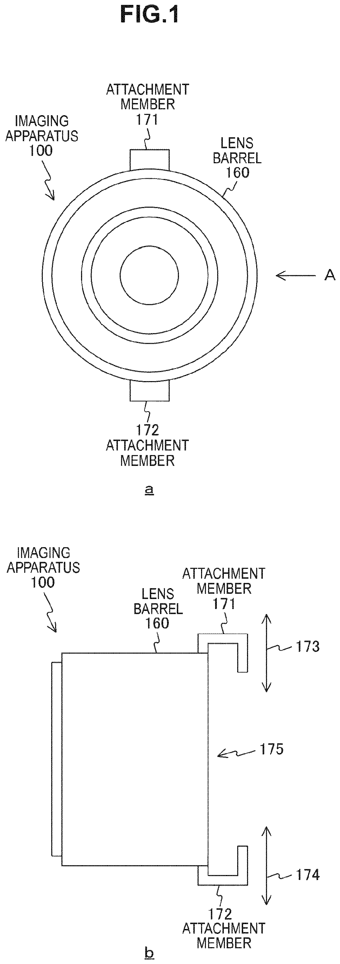

FIG. 1 is a figure which shows an external appearance configuration of an imaging apparatus 100 in a first embodiment of the present technology. A front view of the imaging apparatus 100 is shown in a of FIG. 1, and a side view (a side view in the case where viewed from an arrow A) of the imaging apparatus 100 is shown in b of FIG. 1.

Further, in the embodiments of the present technology, an example will be shown where the imaging apparatus 100 is set to a cylindrical (columnar shaped) imaging apparatus. That is, an example will be shown where the shape of the imaging apparatus 100 is set to a shape so that only a lens portion of a general imaging apparatus (for example, an integrated camera) is taken out. Note that, while the imaging apparatus 100 includes operation members such as a zoom lever and a shutter button, these illustrations are omitted in FIG. 1 or the like. Further, for example, the imaging apparatus 100 is implemented by a digital still camera or a digital video camera (for example, a camera-integrated recorder).

The imaging apparatus 100 includes a lens barrel 160, and attachment members 171 and 172. The lens barrel 160 accommodates each of the members of an optical system, an imaging system or the like.

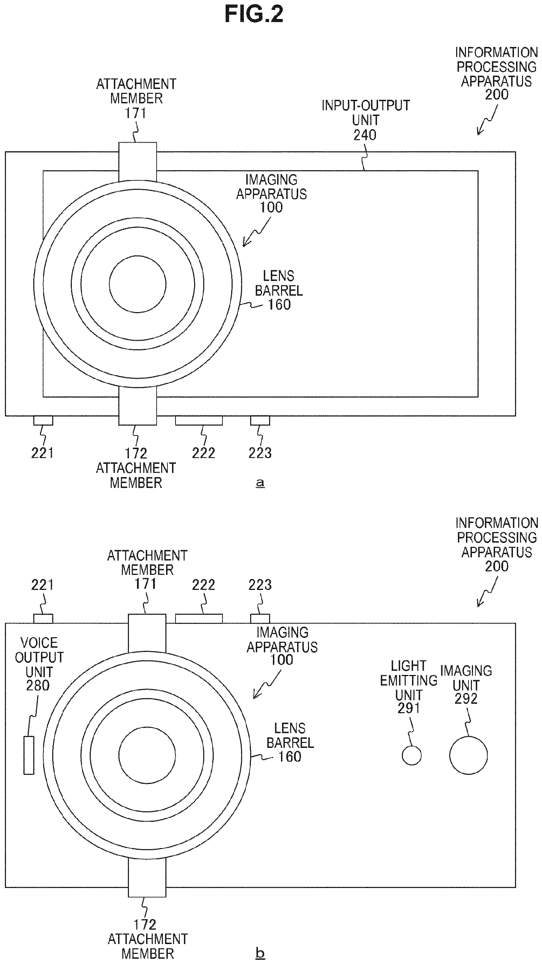

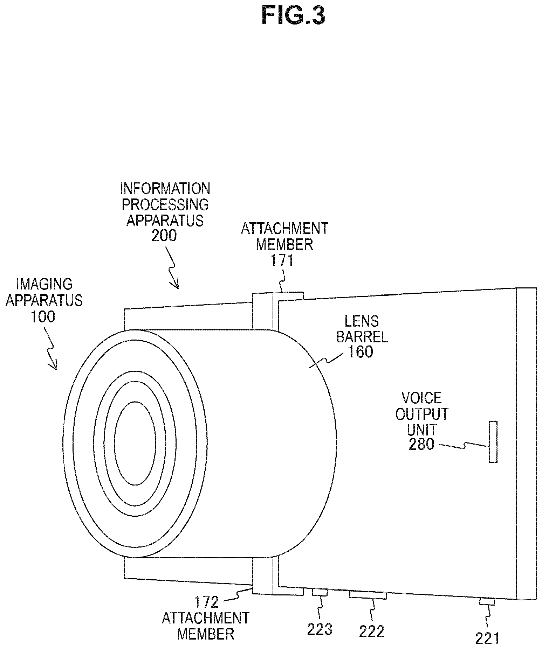

The attachment members 171 and 172 are attachments used at the time when attaching the imaging apparatus 100 to another apparatus (for example, an information processing apparatus 200 shown in FIG. 2). For example, the imaging apparatus 100 can be attached to this apparatus, by causing the attachment member 171 to be moved in an arrow 173 direction, and causing the attachment member 172 to be moved in an arrow 174 direction, in accordance with the shape and size of the other apparatus. That is, the attachment members 171 and 172 are attachments for fixing the imaging apparatus 100 to another apparatus. Further, the attachment surface of the case where the imaging apparatus 100 is mounted on another apparatus is shown as a mounting surface 175 (the surface on the opposite side to the surface of the lens side shown in a of FIG. 1). Note that, an example will be shown in FIGS. 2 and 3 of the case where the imaging apparatus 100 is attached to another apparatus.

In this way, for example, the imaging apparatus 100 is capable of performing a usual imaging operation, and can be used by mounting on another apparatus (for example, a smartphone). Further, in the case where used by mounting on another apparatus, the imaging apparatus 100 can be operated by a remote operation using the other apparatus.

### [Attachment example of the imaging apparatus]

Each of FIGS. 2 and 3 is a figure which shows an external appearance configuration of the case where the imaging apparatus 100 is attached to an information processing apparatus 200 in the first embodiment of the present technology.

An example is shown in a of FIG. 2 of the case where the imaging apparatus 100 is attached to a surface of the information processing apparatus 200 (the surface on which the input-output unit 240 is included). An example is shown in b of FIG. 2 of the case where the imaging apparatus 100 is attached to another surface of the information processing apparatus 200 (the surface on the opposite side to the surface on which the input-output unit 240 is included). Another example is shown in FIG. 3 of the case where the imaging apparatus 100 is attached to another surface of the information processing apparatus 200 (the surface on the opposite side to the surface on which the input-output unit 240 is included).

The information processing apparatus 200 includes operation members 221 through to 223, an input-output unit 240, a voice output unit 280, a light emitting unit 291, and an imaging unit 292. Note that, the information processing apparatus 200 is implemented, for example, by an information processing apparatus such as a smartphone or a tablet terminal.

The operation members 221 through to 223 are operation members used at the time when performing various types of operation inputs.

The input-output unit 240 displays various types of images, and receives an operation input from a user based on a detection state of an object close to or in contact with the display surface of the input-output unit 240.

The voice output unit 280 outputs various types of voice information.

The light emitting unit 291 is a light emitting apparatus for causing light to be emitted to a photographic subject. The light emitting unit 291 is used, for example, at the time when performing an imaging operation by using the information processing apparatus 200 in an environment where sufficient brightness is not able to be expected such as at night or within a room.

The imaging unit 292 generates an image (image data) by capturing a photographic subject.

As shown in FIGS. 2 and 3, by clamping the main body of the information processing apparatus 200 by the attachment members 171 and 172 of the imaging apparatus 100, the imaging apparatus 100 can be fixed to the information processing apparatus 200.

### [Function configuration example of the imaging apparatus and the information processing apparatus]

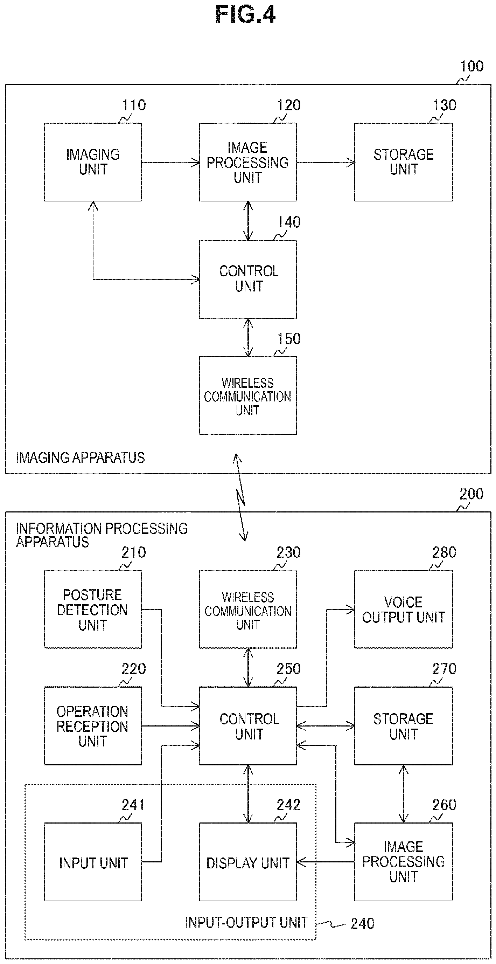

FIG. 4 is a block diagram which shows a function configuration example of the imaging apparatus 100 and the information processing apparatus 200 in the first embodiment of the present technology. Note that, an imaging system constituted by the imaging apparatus 100 and the information processing apparatus 200 is an example of an imaging system described in the claims.

The imaging apparatus 100 includes an imaging unit 110, an image processing unit 120, a storage unit 130, a control unit 140, and a wireless communication unit 150.

The imaging unit 110 generates an image (image data) by capturing a photographic subject, and outputs the generated image to the image processing unit 120. The imaging unit 110 is constituted, for example, by an optical system (a plurality of lens), and an imaging element. Further, the imaging unit 110 has each unit (for example, a zoom lens, a focus lens, a diaphragm) controlled, based on a control of the control unit 140. Note that, in the embodiments of the present technology, in the case where described with "image", it includes both meanings of this image, and image data for displaying this image.

The image processing unit 120 applies a prescribed image process (for example, a de-mosaic process) for an image output from the imaging unit 110, based on a control of the control unit 140, and causes the image to which this image process has been applied to be stored in the storage unit 130. Note that, an image to which an image process has been applied by the image processing unit 120 may be stored in the storage unit 270 by transmitting to the information processing apparatus 200 by using wireless communication.

The storage unit 130 is a recording medium which stores an image to which an image process has been applied by the image processing unit 120 as a content (for example, a still image file, a moving image file). Note that, the storage unit 130 may be built into the imaging apparatus 100, or may be detachable from the imaging apparatus 100.

The control unit 140 controls each of the units in the imaging apparatus 100 based on a control program. For example, the control unit 140 controls each of the units based on an operation input received by operation members such as a zoom lever and a shutter button (not illustrated) included in the imaging apparatus 100. Further, the control unit 140 controls each of the units based on control information from the information processing apparatus 200 received via the wireless communication unit 150. That is, the imaging apparatus 100 can be remotely operated by using the information processing apparatus 200.

The wireless communication unit 150 performs transmission and reception of each information (for example, control data, image data) with other information processing apparatuses (for example, the information processing apparatus 200), by using wireless communication.

Here, a wireless Local Area Network (LAN) can be used, for example, as wireless communication. Wireless Fidelity (Wi-Fi) can be used, for example, as this wireless LAN. Further, wireless communication such as Near Field Communication (NFC), Bluetooth (registered trademark), infrared rays, or portable electric waves can be used, for example, as wireless communication.

Further, a plurality of wireless communication systems may be used. For example, at the time of the start of wireless communication, an exchange of data (for example, a Service Set Identifier (SSID)) related to Wi-Fi when turning on a power source is performed by NFC. Then, the exchange of data from here onwards can be performed by Wi-Fi.

The information processing apparatus 200 includes a posture detection unit 210, an operation reception unit 220, a wireless communication unit 230, an input-output unit 240, a control unit 250, an image processing unit 260, a storage unit 270, and a voice output unit 280.

The posture detection unit 210 detects a change in the posture of the information processing apparatus 200 by detecting an acceleration, movement, orientation or the like of the information processing apparatus 200, and outputs posture information related to the detected change in posture to the control unit 250. Note that, various types of sensors such as a gyro sensor or an acceleration sensor can be used, for example, as the posture detection unit 210.

The operation reception unit 220 is an operation reception unit which receives an operation performed by a user, and outputs control information (operation information) corresponding to the received operation content to the control unit 250. Note that, the operation reception unit 220 corresponds, for example, to the operation members 221 through to 223 shown in FIGS. 2 and 3.

The wireless communication unit 230 performs transmission and reception of each information (for example, control data, image data) with other information processing apparatuses (for example, the imaging apparatus 100) by wireless communication, based on a control of the control unit 250. The above described wireless LAN (for example, Wi-Fi), NFC, Bluetooth, infrared rays, or portable electric waves can be used, for example, as wireless communication. Further, a plurality of wireless communication systems may be used.

The input-output unit 240 has an input unit 241 and a display unit 242 constituted as one body. Further, the input-output unit 240 displays various types of images in a display unit 242 based on a control of the control unit 250, and receives an operation input from a user by the input unit 241 based on a detection state of an object close to or in contact with the display surface of the display unit 242. Further, the input unit 241 outputs control information corresponding to the received operation input to the control unit 250.

For example, an electrostatic type (electrostatic capacitance system) touch panel, which detects contact or closeness of an object having conductivity (for example, a person's finger) based on a change in electrostatic capacitance, can be used as the input unit 241. Further, for example, a display panel such as a Liquid Crystal Display (LCD) or an organic Electro Luminescence (EL) panel can be used as the display unit 242. Also, the input-output unit 240 is constituted, for example, by overlapping a transparent touch panel on the display surface of a display panel.

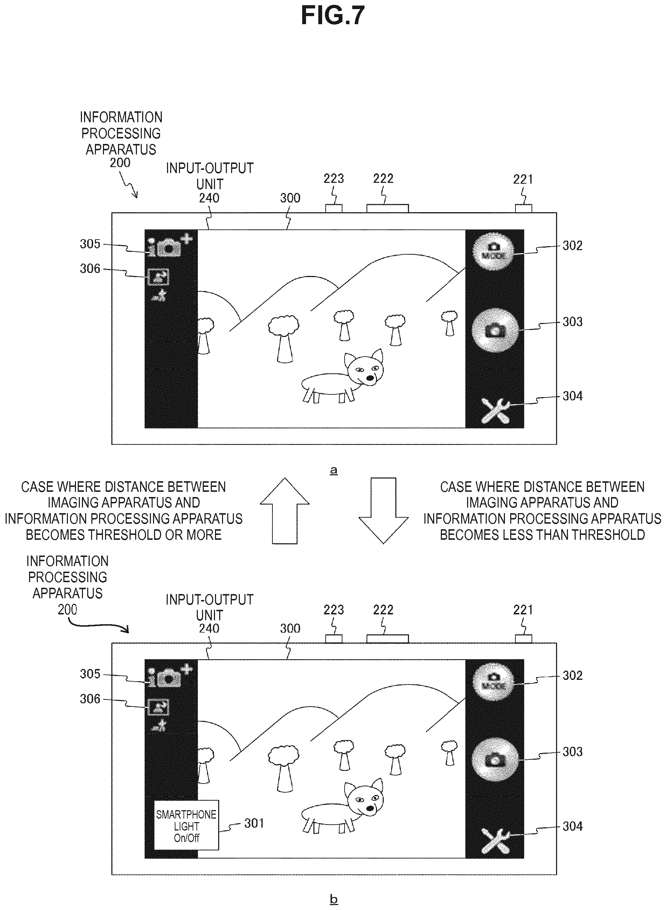

For example, an operation of the information processing apparatus 200 or the imaging apparatus 100 becomes possible by having a user perform a contact operation (or, a closeness operation) of an operation object or the like displayed in the display unit 242. Here, for example, operation objects are displayed in the input-output unit 240, such as operation objects 301 through to 306 shown in b of FIG. 7, and are operation buttons (GUI buttons) or the like for performing an operation input.

The control unit 250 controls each of the units in the information processing apparatus 200 based on a control program. For example, the control unit 250 decides the posture of the information processing apparatus 200, based on posture information from the posture detection unit 210, and switches a display state of a display screen for displaying in the input-output unit 240, based on this decision result. For example, the control unit 250 decides the up-down direction of the posture of the information processing apparatus 200, based on posture information from the posture detection unit 210, and switches the up-down direction of a display screen for displaying in the input-output unit 240, based on this decision result.

Further, for example, in the case where the information processing apparatus 200 and the imaging apparatus 100 are connected via the wireless communication unit 230, the control unit 250 causes a display screen for operating the imaging apparatus 100 to be displayed in the input-output unit 240. In this case, the control unit 250 performs a control for switching a display state of a display screen for operating the imaging apparatus 100, based on a relative position relationship with the imaging apparatus 100. For example, the control unit 250 performs a control for switching a display state of a display screen based on a distance between the information processing apparatus 200 and the imaging apparatus 100. In this case, for example, the control unit 250 causes a display screen which includes operation objects for operating the imaging apparatus 100 (for example, the operation objects 301 through to 306 shown in FIG. 7) to be displayed, and performs a control for changing a display state of the operation objects based on a relative position relationship.

Further, for example, the control unit 250 performs a control for switching a display state of a display screen based on whether or not the imaging apparatus 100 is mounted on the information processing apparatus 200. In this case, the control unit 250 performs a control for switching a display state of a display screen based on whether or not the imaging apparatus 100 is mounted on the display surface of the input-output unit 240. Further, in the case where the imaging apparatus 100 is mounted on the display surface of the input-output unit 240, the control unit 250 performs a control for switching a display state of a display screen based on the position of the imaging apparatus 100 on the display surface of the input-output unit 240. Note that, the control for switching a display state of a display screen based on whether or not the imaging apparatus 100 is mounted on the display surface of the input-output unit 240 will be shown in a second embodiment of the present technology.

In this way, in the information processing apparatus 200, a display screen is switched based on a relative position relationship of the imaging apparatus 100 and the information processing apparatus 200 connected by using wireless communication. Further, the control unit 140 of the imaging apparatus 100 performs a control related to an imaging operation based on an operation input using a display screen performed in the information processing apparatus 200 in which this display screen is displayed.

The image processing unit 260 applies a prescribed image process for an image generated by the imaging apparatus 100 or an image generated by the imaging unit 292 (shown in b of FIG. 2), based on a control of the control unit 250, and causes the image to which this image process has been applied to be displayed in the display unit 242. Further, the image processing unit 260 causes these images to be stored in the storage unit 270, based on a control of the control unit 250. Further, the image processing unit 260 causes a display screen, used in the case where an imaging operation using the imaging apparatus 100 is performed, to be displayed in the display unit 242, based on a control of the control unit 250.

The storage unit 270 is a recording medium which stores each information, based on a control of the control unit 250. For example, an image generated by the imaging apparatus 100 or an image generated by the imaging unit 292 (shown in b of FIG. 2) is stored as a content (for example, a still image file, a moving image file) in the storage unit 270. Note that, the storage unit 270 may be built into the information processing apparatus 200, or may be detachable from the information processing apparatus 200.

The voice output unit 280 outputs voice information, based on a control of the control unit 250. The voice output unit 280 can be implemented, for example, by a speaker.

### [Use examples of the imaging apparatus and the information processing apparatus]

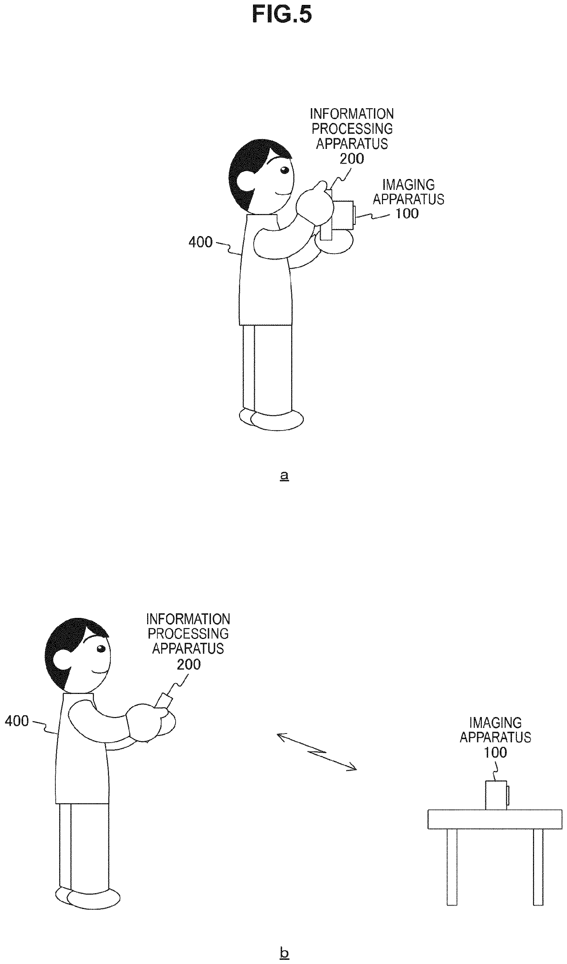

FIG. 5 is a figure which show use examples of the imaging apparatus 100 and information processing apparatuses 200 through to 203 in the first embodiment of the present technology.

An example is shown in a of FIG. 5 of the case where using the imaging apparatus 100 mounted on the information processing apparatus 200. For example, as shown in b of FIG. 2, the imaging apparatus 100 can be mounted on a surface of the information processing apparatus 200 (the surface on the opposite side to the surface on which the input-output unit 240 is installed). In this case, by using the information processing apparatus 200 on which the imaging apparatus 100 is mounted, a user 400 can perform photography approximately the same as photography using a general imaging apparatus (for example, an integrated camera).

An example is shown in b of FIG. 5 of the case where using the imaging apparatus 100 not mounted on the information processing apparatus 200. For example, as shown in b of FIG. 5, the imaging apparatus 100 can be set at a location separated from the information processing apparatus 200. Also in this case, a user 400 can remotely operate the imaging apparatus 100 by using the information processing apparatus 200, and so can perform photography using the imaging apparatus 100 and the information processing apparatus 200.

Here, it is assumed that the use state of the information processing apparatus 200 (for example, the way to hold) is different, in the case where the imaging apparatus 100 is mounted on the information processing apparatus 200, and in cases other than this. Accordingly, in a first embodiment of the present technology, an example is shown where a display state of a display screen is switched based on a distance between the imaging apparatus 100 and the information processing apparatus 200. Further, in a second embodiment of the present technology, an example is shown where a display state of a display screen is switched based on an attachment position of the imaging apparatus 100.

### [Acquisition example of a distance between the imaging apparatus and the information processing apparatus]

Here, a method will be described which acquires a distance between the imaging apparatus 100 and the information processing apparatus 200.

### [Estimation example of a distance using a received electric wave intensity]

For example, a distance between the imaging apparatus 100 and the information processing apparatus 200 can be estimated by using a received electric wave intensity. For example, a table showing a relationship between a received electric wave intensity and a distance is created beforehand, and stored in the storage unit 270. Then, the control unit 250 of the information processing apparatus 200 can acquire, from this table, a distance corresponding to a received electric wave intensity acquired by the wireless communication unit 230, and can use this distance as a distance between the imaging apparatus 100 and the information processing apparatus 200.

### [Estimation example of a distance using the input-output unit]

For example, a distance between the imaging apparatus 100 and the information processing apparatus 200 can be estimated by using the input-output unit 240. Here, a case is assumed where a touch panel of a projection-type electrostatic capacitance system is used, as the input-output unit 240. In this case, a material which reacts with a touch panel of a projection-type electrostatic capacitance system is adopted on a mounting surface 175 (such as shown in b of FIG. 1) to the information processing apparatus 200 of the imaging apparatus 100. This material is, for example, a conductive silicon rubber.

For example, as shown in a of FIG. 2, in the case where the imaging apparatus 100 is mounted on the display surface of the input-output unit 240, the above described material (for example, a conductive silicon rubber) is adopted on the mounting surface 175 of the imaging apparatus 100, and so the input-output unit 240 can detect the imaging apparatus 100. In this case, the control unit 250 can decide whether or not the imaging apparatus 100 has been mounted on the display surface of the input-output unit 240, based on the size of this detected object. For example, the size (surface area) of the mounting surface 175 of the imaging apparatus 100 is stored in the storage unit 270. Then, the control unit 250 compares the size of this detected object, and the size stored in the storage unit 270, and decides whether or not these match or approximately match. Here, an approximate match means, for example, the case where a difference value between the size of this detected object and the size stored in the storage unit 270 is small on the basis of a threshold.

Then, in the case where the size of this detected object and the size stored in the storage unit 270 match or approximately match, the control unit 250 can decide that the imaging apparatus 100 has been mounted on the display surface of the input-output unit 240. On the other hand, in the case where the size of this detected object and the size stored in the storage unit 270 do not match, or do not approximately match, the control unit 250 can decide that the imaging apparatus 100 is not mounted on the display surface of the input-output unit 240.

Further, the input-output unit 240 can detect the position of the imaging apparatus 100 on the display surface. Accordingly, the control unit 250 can switch a display state of a display screen, based on the position of the imaging apparatus 100 on the display surface. This switching example of the display screen will be shown in a second embodiment of the present technology.

### [Example where a member for detecting the mounting is used]

For example, the mounting of the imaging apparatus 100 can be detected by using a member for detecting that the imaging apparatus 100 has been mounted on the information processing apparatus 200. A switch can be installed in at least one of the imaging apparatus 100 and the information processing apparatus 200, for example, as this member.

For example, it is assumed to be a case where a switch is installed in the imaging apparatus 100. In this case, at the time when the imaging apparatus 100 has been mounted on the information processing apparatus 200, this mounting is detected by this switch, and information showing that this mounting has been detected is output to the control unit 140. Then, in the case where the information showing that this mounting has been detected is acquired, the control unit 140 transmits this to the information processing apparatus 200 via the wireless communication unit 150. In this way, the control unit 250 of the information processing apparatus 200 can detect that the imaging apparatus 100 has been mounted on the information processing apparatus 200.

Further, for example, it is assumed to be a case where a switch is installed in the information processing apparatus 200. In this case, at the time when the imaging apparatus 100 has been mounted on the information processing apparatus 200, this mounting is detected by this switch, and information showing that this mounting has been detected is output to the control unit 250. In this way, the control unit 250 of the information processing apparatus 200 can detect that the imaging apparatus 100 has been mounted on the information processing apparatus 200.

Further, a distance between the imaging apparatus 100 and the information processing apparatus 200 may be detected, by using another sensor. For example, a distance sensor (for example, a sensor which detects a distance by using infrared rays or ultrasonic waves) can be used. Further, for example, a distance between the imaging apparatus 100 and the information processing apparatus 200 may be detected by using a Global Positioning System (GPS). For example, the respective positions of the imaging apparatus 100 and the information processing apparatus 200 can be acquired by using GPS, and a distance between the imaging apparatus 100 and the information processing apparatus 200 can be calculated based on these positions.

Note that, the above described detection method of a distance and detection method of the mounting are examples, and are not limited to these, and other detection methods may be used.

### [Switching example of the display screen]

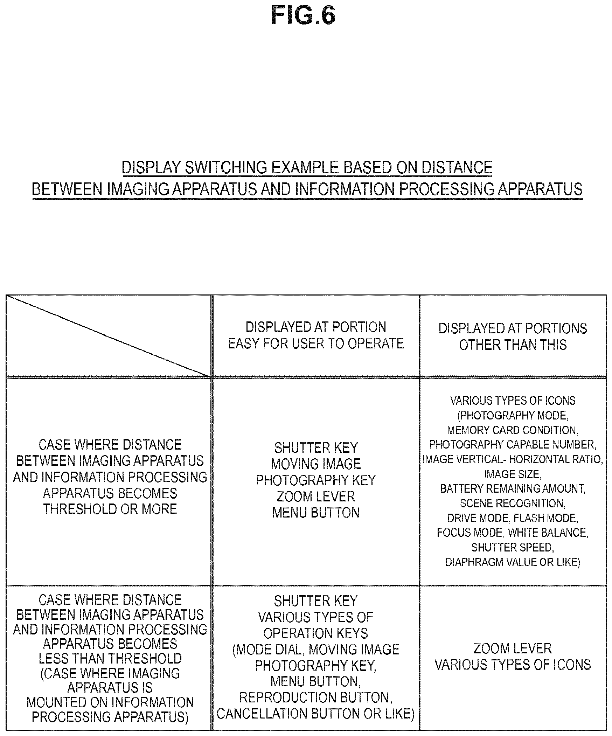

FIG. 6 is a figure which shows a switching example of a display screen displayed in the input-output unit 240 in the first embodiment of the present technology. An example is shown in FIG. 6 of the case where a distance between the imaging apparatus 100 and the information processing apparatus 200 becomes a threshold or more, and the case where this distance becomes less than a threshold.

For example, in the case where a distance between the imaging apparatus 100 and the information processing apparatus 200 becomes a threshold or more, it is assumed that a frequent setting change while photographing is comparatively small. Accordingly, it is preferable for operation objects displayed in the input-output unit 240 (for example, an operation key) to be made simple by limiting to a minimum. For example, as shown in FIG. 6, a shutter key, a moving image photography key, a zoom key, a menu key or the like can be displayed at a portion easy for a user to operate in the input-output unit 240. Further, various types of icons or the like can be displayed at portions other than this.

Here, for example, a portion easy for a user to operate means the region of the right side in the input-output unit 240, in the case of a right-handed user, and means the region of the left side in the input-output unit 240, in the case of a left-handed user.

Further, for example, in the case where a distance between the imaging apparatus 100 and the information processing apparatus 200 becomes less than a threshold (for example, in the case where the imaging apparatus 100 is mounted on the information processing apparatus 200), it is assumed that a setting change while photographing is comparatively large. In particular, in the case where the imaging apparatus 100 is mounted on the information processing apparatus 200, it is assumed that a user supports the lens barrel 160 of the imaging apparatus 100 with his or her left hand, or performs a ring operation or a zoom operation, and performs a body operation with his or her right hand. Accordingly, it is preferable to arrange operation objects such as various types of setting buttons in the input-output unit 240. For example, as shown in FIG. 6, a shutter key, various types of operation keys or the like can be displayed at a portion easy for a user to operate in the input-output unit 240. Further, a zoom lever, various types of icons or the like can be displayed at portions other than this.

Note that, these display switching examples are examples, and may be set to display switching other than these. Hereinafter, these display switching examples will be shown.

### [Display examples of the display screen]

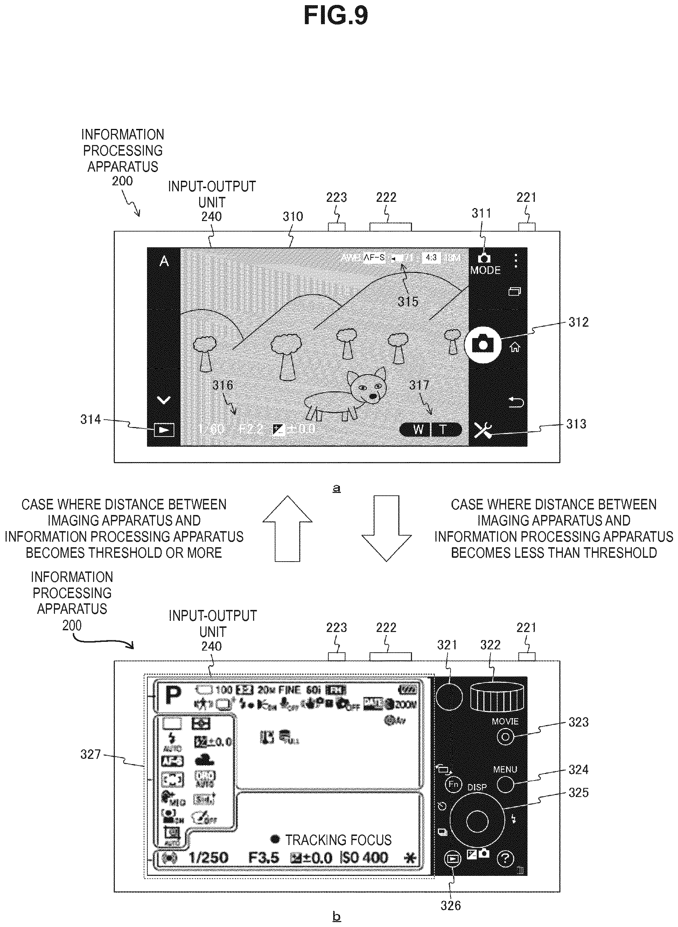

FIG. 7 through to FIG. 9 are figures which show display examples of a display screen displayed in the input-output unit 240 in the first embodiment of the present technology.

Display examples are shown in FIG. 7 through to a of FIG. 9 of the case where a distance between the imaging apparatus 100 and the information processing apparatus 200 becomes a threshold or more, and display examples are shown in FIG. 7 through to b of FIG. 9 of the case where a distance between the imaging apparatus 100 and the information processing apparatus 200 becomes less than a threshold.

An example is shown in FIGS. 7 to 9, in the case where an imaging operation using the imaging apparatus 100 and the information processing apparatus 200 is performed, where an image generated by the imaging unit 110 of the imaging apparatus 100 is displayed in the input-output unit 240 as a live view image. That is, an image generated by the imaging unit 110 of the imaging apparatus 100 is sequentially transmitted to the information processing apparatus 200, via the wireless communication units 150 and 230, and this image is displayed in the input-output unit 240 as a live view image. Note that, an example is shown in FIGS. 7 to 9 where an image, in which a dog walking in front of mountains is set to a photographic subject, is displayed as the live view images 300 and 310.

Further, examples are shown in FIG. 7 through to FIG. 9, in the case where an imaging operation using the imaging apparatus 100 and the information processing apparatus 200 is performed, where operation objects for operating the imaging apparatus 100 are displayed in the input-output unit 240. These operation objects are displayed in the input-output unit 240 around a live view image, or overlapping a live view image.

### [Display switching example of an operation object for turning on and off the light emitting unit of the information processing apparatus]

An example is shown in FIG. 7 where a display state of an operation object 301 for turning on and off the light emitting unit 291 of the information processing apparatus 200 is switched, based on a distance between the imaging apparatus 100 and the information processing apparatus 200.

An example is shown in FIG. 7 where a live view image 300 is displayed, and a plurality of operation objects 301 through to 306 are displayed on both sides of the live view image 300.

Note that, the operation object 301 is an operation object pressed at the time when performing an on-off operation of the light emitting unit 291 of the information processing apparatus 200. Note that, the operation object 302 is an operation object pressed at the time when switching a photography mode of the imaging apparatus 100. Further, the operation object 303 is an operation object pressed at the time when performing a shutter operation of the imaging apparatus 100. Further, the operation object 304 is an operation object pressed at the time when performing various types of setting operations of the imaging apparatus 100. Further, the operation object 305 is an operation object pressed at the time when switching an exposure mode of the imaging apparatus 100. Further, the operation object 306 is an operation object for displaying scene information set in the imaging apparatus 100.

For example, in the case where a distance between the imaging apparatus 100 and the information processing apparatus 200 becomes a threshold or more, it is assumed that light from the light emitting unit 291 of the information processing apparatus 200 does not reach a photographic subject which becomes an imaging target of the imaging apparatus 100. Accordingly, it is assumed that light output from the light emitting unit 291 of the information processing apparatus 200 is hardly used as photography auxiliary light. Accordingly, as shown in a of FIG. 7, in the case where a distance between the imaging apparatus 100 and the information processing apparatus 200 becomes a threshold or more, the operation object 301 is not displayed.

Further, for example, in the case where a distance between the imaging apparatus 100 and the information processing apparatus 200 becomes less than a threshold, it is assumed that light from the light emitting unit 291 of the information processing apparatus 200 reaches a photographic subject which becomes an imaging target of the imaging apparatus 100. Accordingly, since light output from the light emitting unit 291 of the information processing apparatus 200 can be used as photography auxiliary light, it is assumed that the light emitting unit 291 of the information processing apparatus 200 is used. Accordingly, as shown in b of FIG. 7, in the case where a distance between the imaging apparatus 100 and the information processing apparatus 200 becomes less than a threshold, the operation object 301 is displayed.

### [Display switching example of an operation object for performing a zoom operation]

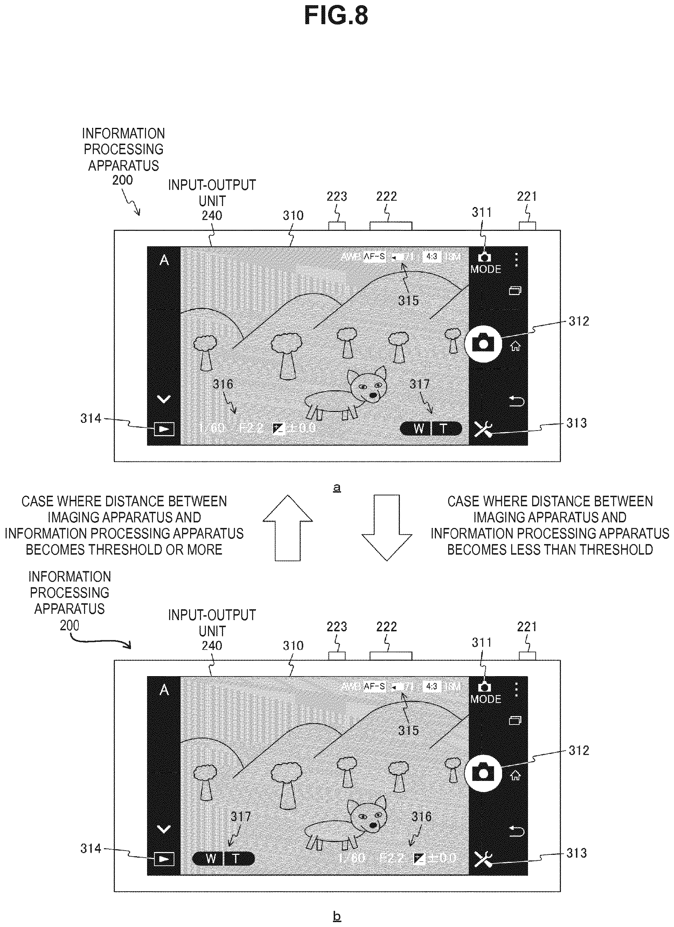

An example is shown in FIG. 8 where a display state of an operation object 317 for performing a zoom operation of the imaging apparatus 100 is switched, based on a distance between the imaging apparatus 100 and the information processing apparatus 200.

An example is shown in FIG. 8 where a live view image 310 is displayed, a plurality of operation objects 311 through to 314 are displayed on both sides of the live view image 310, and a plurality of operation objects 315 through to 317 are displayed overlapping the live view image 310. Note that, a description will be made in FIG. 8 by assuming that a user is right-handed.

Note that, the operation objects 311 through to 313 correspond to the operation objects 301 through to 303 shown in FIG. 7. Further, the operation object 314 is an operation object pressed at the time when performing reproduction of an image. Further, the operation objects 315 and 316 are operation objects for changing each setting by displaying various types of setting information of the imaging apparatus 100. Further, the operation object 317 is an operation object for performing a zoom operation of the imaging apparatus 100. For example, a W (wide) button (wide-side button) and a T (tele) button (tele-side button) are displayed as the operation object 317. For example, in the case where a user operation is performed for the W button or the T button, the control unit 250 acquires control information corresponding to this user operation, and transmits this control information to the control unit 140 of the imaging apparatus 100 via the wireless communication units 230 and 150. In the case where this control information is received, the control unit 140 of the imaging apparatus 100 controls a drive of a zoom lens of the imaging unit 110 based on this received control information.

As described above, an operation member (zoom lever) for performing a zoom operation is included in the main body of the imaging apparatus 100. Therefore, for example, in the case where a distance between the imaging apparatus 100 and the information processing apparatus 200 becomes a threshold or more, it is assumed that a user does not reach the operation member (zoom lever) included in the main body of the imaging apparatus 100. In this case, a user is not able to operate the operation member (zoom lever) included in the main body of the imaging apparatus 100. Accordingly, as shown in a of FIG. 8, in the case where a distance between the imaging apparatus 100 and the information processing apparatus 200 becomes a threshold or more, the operation object 317 is displayed at a portion easy for a user to operate (the right side portion easy for a right-handed user to operate). In this way, by arranging the operation object 317, a user can easily perform a zoom operation with the thumb of his or her right hand.

Further, for example, in the case where a distance between the imaging apparatus 100 and the information processing apparatus 200 becomes less than a threshold, it is assumed that a user reaches the operation member (zoom lever) included in the main body of the imaging apparatus 100. In this case, a user can operate the operation member (zoom lever) included in the main body of the imaging apparatus 100. Accordingly, as shown in b of FIG. 8, in the case where a distance between the imaging apparatus 100 and the information processing apparatus 200 becomes less than a threshold, the operation object 317 is displayed at a portion different to the portion easy for a user to operate. For example, the display positions of the operation objects 316 and 317 can be interchanged. In this way, by arranging the operation object 316, a user can easily perform a setting operation of the imaging apparatus 100 with the thumb of his or her right hand.

### [Display switching example of operation objects for performing various types of operations of the imaging apparatus]

An example is shown in FIG. 9 where a display state of operation objects 321 through to 327 for performing various types of operations of the imaging apparatus 100 is switched, based on a distance between the imaging apparatus 100 and the information processing apparatus 200.
a of FIG. 9 is similar to a of FIG. 8. Further, the operation objects 321 through to 326 shown in b of FIG. 9 are, for example, operation objects corresponding to each of the operation members installed on a back surface side (the opposite side to the lens side) of a general imaging apparatus (for example, an integrated camera).

For example, the operation object 321 is an operation object pressed at the time when performing a shutter operation of the imaging apparatus 100. Further, the operation object 322 is an operation object used at the time when performing a trace operation. The operation object 322 corresponds, for example, to a mode dial, and can perform various types of operations, by performing an operation (trace operation) which moves the operation object 322 in a left-right direction, such as a mode dial.

Further, the operation object 323 is an operation object pressed at the time when performing an operation which starts moving image recording of the imaging apparatus 100. The operation object 323 corresponds, for example, to a moving image REC button. Further, the operation object 324 is an operation object pressed at the time when displaying a menu screen for performing various types of settings related to the imaging apparatus 100. The operation object 324 corresponds, for example, to a menu button.

Further, the operation object 325 is an operation object used at the time when performing a trace operation or a determination operation. The operation object 325 corresponds, for example, to a control wheel, and can perform a movement operation of a cursor displayed in the input-output unit 240 or various types of determination operations. Further, the operation object 326 is an operation object pressed at the time when performing reproduction of an image.

Further, a live view image, various types of operation objects (for example, icons) or the like are displayed in a display region 327 surrounded by a rectangular dotted line. Note that, an example is shown in b of FIG. 9 where various types of operation objects (for example, icons) or the like are displayed in the display region 327.

Here, for example, in the case where a distance between the imaging apparatus 100 and the information processing apparatus 200 becomes less than a threshold (in the case where the imaging apparatus 100 is mounted on the information processing apparatus 200), it is preferable to use the imaging apparatus 100 and the information processing apparatus 200 as a general imaging apparatus. In particular, in the case where the imaging apparatus 100 is mounted on the information processing apparatus 200, it is assumed that a user expects an operativeness to an extent that there is no sense of discomfort compared with a general imaging apparatus (for example, an integrated camera). Accordingly, it is preferable to perform an arrangement of operation members to an extent approximately the same as that of a general imaging apparatus (for example, an integrated camera). Accordingly, an example is shown in b of FIG. 9 where an arrangement of operation members to an extent approximately the same as that of a general imaging apparatus is implemented by a display of each of the operation objects. Specifically, as shown in b of FIG. 9, the operation objects 321 through to 326, which correspond to each of the operation members installed on the back surface side (the opposite side to the lens side) of a general imaging apparatus (for example, a digital still camera), are displayed in the input-output unit 240.

### [Operation example of the information processing apparatus]

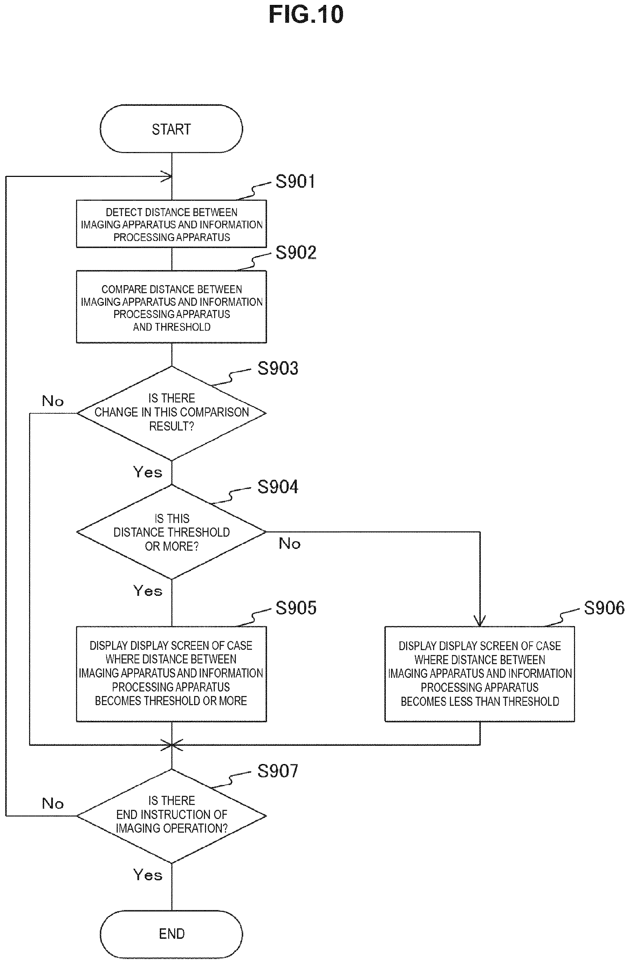

FIG. 10 is a flow chart which shows an example of a process procedure of a display control process by the information processing apparatus 200 in the first embodiment of the present technology. An example is shown in FIG. 10 where a display state of the input-output unit 240 is switched, based on a distance between the imaging apparatus 100 and the information processing apparatus 200.

First, the control unit 250 detects a distance between the imaging apparatus 100 and the information processing apparatus 200 (step S901). This detection method of a distance can use any of the above described methods.

To continue, the control unit 250 compares the distance between the imaging apparatus 100 and the information processing apparatus 200, and a threshold (step S902). Several cm (for example, 1 cm) can be used, for example, as this threshold. In this case, for example, if the distance between the imaging apparatus 100 and the information processing apparatus 200 is less than the threshold, it can be considered that the imaging apparatus 100 is mounted on the information processing apparatus 200.

To continue, the control unit 250 decides whether or not a change has occurred in a comparison result between the distance between the imaging apparatus 100 and the information processing apparatus 200 and the threshold (step S903). The case where a change has occurred in this comparison result means, for example, the case where this distance is changed from a condition of less than the threshold to a condition of the threshold or more, or the case where this distance is changed from a condition of the threshold or more to a condition of less than the threshold. Then, in the case where a change has not occurred in this comparison result (step S903), it proceeds to step S907.

Further, in the case where a change has occurred in this comparison result (step S903), the control unit 250 decides whether or not the condition after this change is a condition where the distance between the imaging apparatus 100 and the information processing apparatus 200 is the threshold or more (step S904). Then, in the case where the condition after this change is a condition where the distance between the imaging apparatus 100 and the information processing apparatus 200 is the threshold or more (step S904), the control unit 250 causes a display screen of the case where this distance becomes the threshold or more to be displayed in the input-output unit 240 (step S905). For example, the display screens shown in a of FIG. 7, a of FIG. 8, and a of FIG. 9 are displayed in the input-output unit 240.

On the other hand, in the case where the condition after this change is a condition where the distance between the imaging apparatus 100 and the information processing apparatus 200 is less than the threshold (step S904), the control unit 250 causes a display screen of the case where this distance becomes less than the threshold to be displayed in the input-output unit 240 (step S906). For example, the display screens shown in b of FIG. 7, b of FIG. 8, and b of FIG. 9 are displayed in the input-output unit 240.

To continue, the control unit 250 decides whether or not there is an end instruction of the imaging operation (step S907), and in the case where there is no end instruction of the imaging operation, it returns to step S901, and in the case where there is an end instruction of the imaging operation, the operation of the display control process ends.

### <2. Second embodiment

In the first embodiment of the present technology, an example has been shown where a display state of a display screen is switched based on a distance between an imaging apparatus and an information processing apparatus. Here, for example, a case is assumed where a distance between an imaging apparatus and an information processing apparatus is less than a threshold, and the imaging apparatus is mounted on the display surface of an input-output unit of the information processing apparatus. In this case, a user is not able to view the portion where the imaging apparatus is attached, from within the display screen displayed in the input-output unit. Accordingly, in such a case, it is preferable for a display state of a display screen to be switched based on this attachment position.

Accordingly, in a second embodiment of the present technology, an example is shown where a display state of a display screen is switched based on an attachment position of an imaging apparatus. Note that, the imaging apparatus and the information processing apparatus in the second embodiment of the present technology are the same as the imaging apparatus 100 and the information processing apparatus 200 shown in FIG. 1 through to FIG. 4.

### [Determination example of the attachment position]

First, a determination method will be described which determines an attachment position of the imaging apparatus 100.

### [Determination example using a detection member]

For example, a detection member for detecting the mounting of the imaging apparatus 100 is installed in the information processing apparatus 200. For example, detection members are installed at both end parts (both end parts of the longer direction of the information processing apparatus 200) on each of the front surface (the surface on which the input-output unit 240 is installed) and the rear surface (the surface on which the imaging unit 292 is installed) of the information processing apparatus 200. A switch or sensor for detecting the mounting of the imaging apparatus 100 can be used, for example, as this detection member. Also, by using this detection member, it can be detected at what portion of the front surface and the rear surface of the information processing apparatus 200 the imaging apparatus 100 is mounted.

### [Determination example using the input-output unit]

For example, in the case where the input-output unit 240 is a touch panel of a light sensor system, a position and size of the imaging apparatus 100 mounted on the display surface of the input-output unit 240 can be detected. Further, for example, in the case where the input-output unit 240 is a touch panel of a projection-type electrostatic capacitance system, a position and size of the imaging apparatus 100 mounted on the display surface of the input-output unit 240 can also be detected. For example, by adopting a material which reacts with a touch panel of a projection-type electrostatic capacitance system, on the mounting surface 175 (shown in b of FIG. 1) of the imaging apparatus 100, a position and size of the imaging apparatus 100 mounted on the display surface of the input-output unit 240 can be detected.

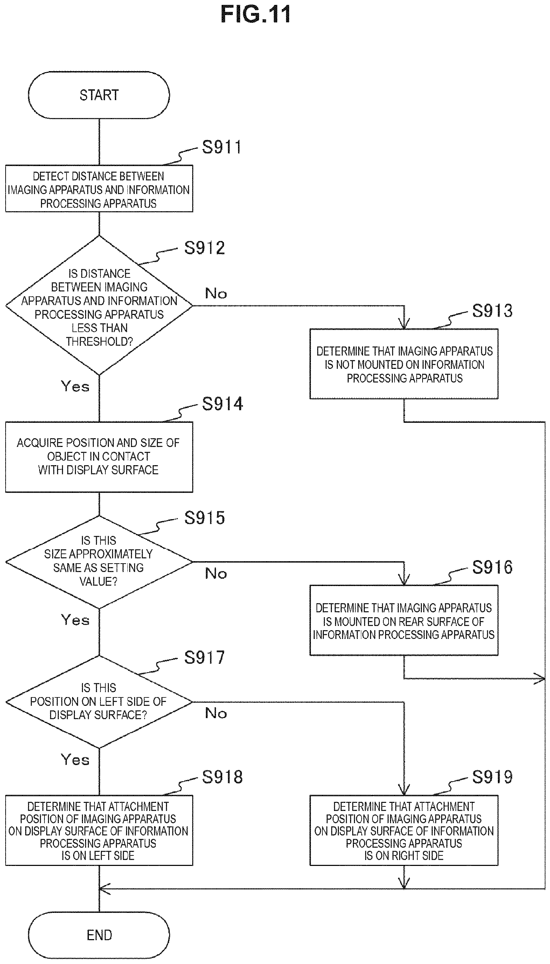

Accordingly, the control unit 250 decides whether or not a distance between the imaging apparatus 100 and the information processing apparatus 200 is less than a threshold (for example, several cm), and in the case where this distance is less than a threshold, can decide that the imaging apparatus 100 is mounted on the information processing apparatus 200. In this case, the control unit 250 can determine an attachment position on the display surface of the input-output unit 240, based on a detection state on the display surface of the input-output unit 240. An example of this determination process is shown in FIG. 11.

### [Operation example of the information processing apparatus]

FIG. 11 is a flow chart which shows an example of a process procedure of an attachment position determination process by the information processing apparatus 200 in the second embodiment of the present technology. An example is shown in FIG. 11, in the case where a distance between the imaging apparatus 100 and the information processing apparatus 200 is less than a threshold (for example, several cm), where it is determined that the imaging apparatus 100 is mounted on the information processing apparatus 200. Further, an example is shown in FIG. 11 where it is determined whether it is on the left side or the right side of the display surface of the input-output unit 240, as an attachment position on the display surface of the input-output unit 240.

First, the control unit 250 detects a distance between the imaging apparatus 100 and the information processing apparatus 200 (step S911). This detection method of a distance can use any of the above described methods.

To continue, the control unit 250 compares the distance between the imaging apparatus 100 and the information processing apparatus 200 and a threshold, and decides whether or not this distance is less than the threshold (step S912). Several cm (for example, 1 cm) can be used, for example, as this threshold. Then, in the case where this distance is the threshold or more (step S912), the control unit 250 determines that the imaging apparatus 100 is not mounted on the information processing apparatus 200 (step S913).

Further, in the case where this distance is less than the threshold (step S912), the control unit 250 determines that the imaging apparatus 100 is mounted on the information processing apparatus 200. In this case, the control unit 250 determines an attachment position of the imaging apparatus 100 in the information processing apparatus 200.

Specifically, the control unit 250 acquires a position and size of an object in contact with the display surface of the input-output unit 240 (step S914). To continue, the control unit 250 decides whether or not the size of this acquired object is the same (or, approximately the same) as a setting value (step S915). This decision of approximately the same can be set to a range in which an error detection can be allowed. Further, the setting value can be set, for example, to a value the same (or, approximately the same) as the size of the mounting surface 175 (shown in b of FIG. 1) of the imaging apparatus 100.

In the case where the size of this acquired object is the same (or, approximately the same) as the setting value (step S915), the control unit 250 determines that the imaging apparatus 100 is mounted on the display surface of the input-output unit 240. In this case, the control unit 250 determines an attachment position of the imaging apparatus 100 on the display surface of the input-output unit 240.

Specifically, the control unit 250 determines whether or not the position of this acquired object (the position of the object in contact with the display surface of the input-output unit 240) is on the left side on the display surface of the input-output unit 240 (step S917). Then, in the case where the position of this acquired object is on the left side on the display surface of the input-output unit 240 (step S917), the control unit 250 determines that an attachment position of the imaging apparatus 100 is on the left side on the display surface of the input-output unit 240 (step S918). On the other hand, in the case where the position of this acquired object is not on the left side on the display surface of the input-output unit 240 (in the case where it is on the right side) (step S917), the control unit 250 decides that an attachment position of the imaging apparatus 100 is on the right side on the display surface of the input-output unit 240 (step S919).

### [Display example of the display screen]

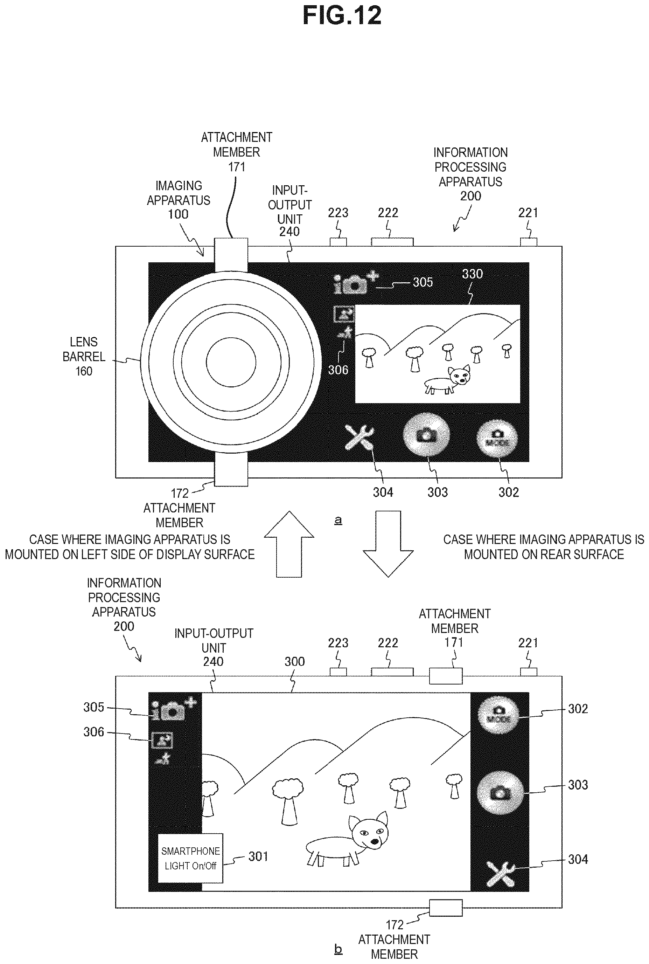

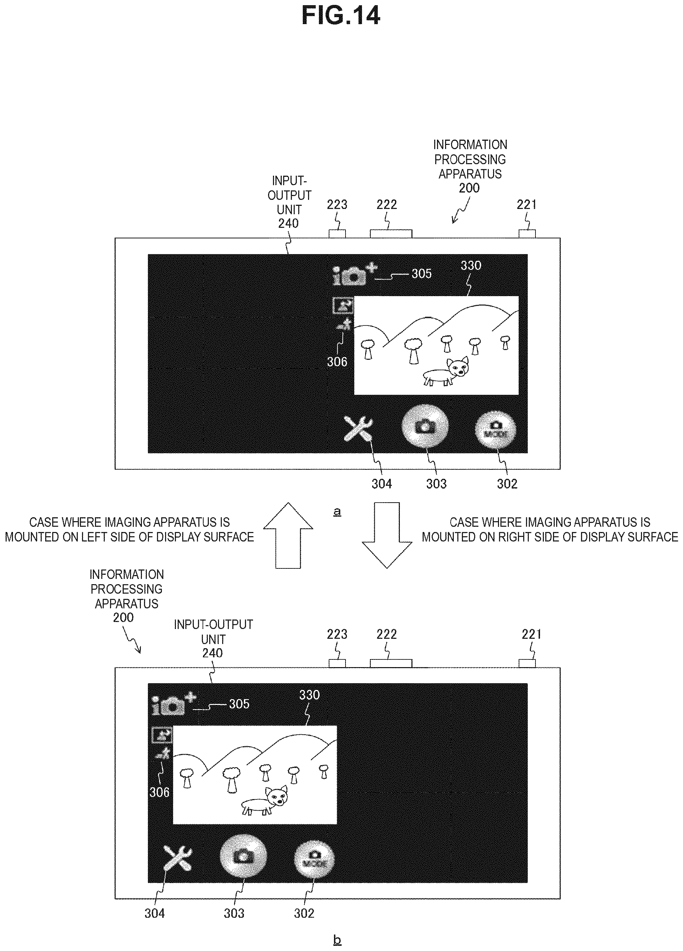

FIG. 12 through to FIG. 14 are figures which show display examples of a display screen displayed in the input-output unit 240 in the second embodiment of the present technology.

Note that, examples are shown in FIG. 12 through to FIG. 14, similar to the examples shown in FIG. 7 through to FIG. 9, in the case where an imaging operation using the imaging apparatus 100 and the information processing apparatus 200 is performed, where an image generated by the imaging unit 110 of the imaging apparatus 100 is displayed in the input-output unit 240 as a live view image. Further, examples are shown, similar to FIG. 7 through to FIG. 9, in the case where an imaging operation using the imaging apparatus 100 and the information processing apparatus 200 is performed, where operation objects for operating the imaging apparatus 100 are displayed in the input-output unit 240.

### [Display switching example of operation objects corresponding to the mounting surface]

An example is shown in FIG. 12 where a display state of operation objects is switched based on the surface on which the imaging apparatus 100 is mounted in the information processing apparatus 200.

A display example is shown in a of FIG. 12 of the case where the imaging apparatus 100 is mounted on the display surface of the input-output unit 240. For example, in the case where photographing a user himself or herself or in the case where performing photography of a group photograph, there will be cases where it is performed by mounting the imaging apparatus 100 on the display surface of the input-output unit 240, in order for composition confirmation. Further, an example is shown in a of FIG. 12 where a live view image 330 is displayed, and a plurality of operation objects 301 through to 306 are displayed around the live view image 330. Note that, since the operation objects 301 through to 306 are the same as the operation objects 301 through to 306 shown in FIG. 7, they will be shown in FIG. 12 by attaching the same reference numerals.

A display example is shown in b of FIG. 12 of the case where the imaging apparatus 100 is mounted on the surface on the opposite side to the surface on which the input-output unit 240 is installed. Since b of FIG. 12 is similar to the example shown in b of FIG. 7, other than adding the attachment members 171 and 172 of the imaging apparatus 100, it will be shown by attaching reference numerals the same as those of b of FIG. 7.

For example, as shown in a of FIG. 12, in the case where the imaging apparatus 100 is mounted on the display surface of the input-output unit 240, a user is not able to view that displayed on the region where the imaging apparatus 100 is mounted. Accordingly, in the case where the imaging apparatus 100 is mounted on the display surface of the input-output unit 240, each of the information which become a display target are displayed on regions other than the region where the imaging apparatus 100 is mounted. That is, in the case where the imaging apparatus 100 is mounted on the display surface of the input-output unit 240, a region covered by the imaging apparatus 100 is generated on the display surface of the input-output unit 240, and so each of the information which become a display target are displayed on regions not covered by the imaging apparatus 100.

For example, as shown in a of FIG. 12, the control unit 250 compresses the live view image 330 and causes it to be displayed. Further, the control unit 250 changes the arrangement and size of the plurality of operation objects 301 through to 306 and causes them to be displayed.

### [Display switching example of operation objects corresponding to the attachment position on the display surface]

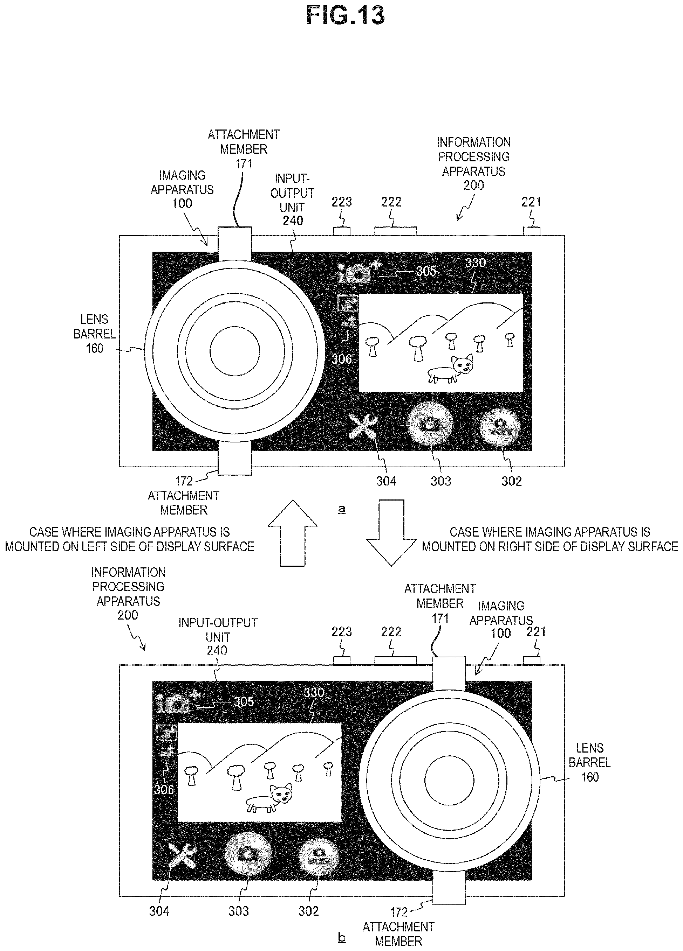

Examples are shown in FIG. 13 and FIG. 14 where a display state of operation objects is switched based on the position where the imaging apparatus 100 is mounted on the display surface of the input-output unit 240. Note that, the entire display surface of the input-output unit 240 which corresponds to FIG. 13 is shown in FIG. 14.

A display example is shown in a of FIG. 13 of the case where the imaging apparatus 100 is mounted on the left side position on the display surface of the input-output unit 240. Note that, the example shown in a of FIG. 13 is the same as that of a of FIG. 12. Further, a display example is shown in a of FIG. 14 which corresponds to a of FIG. 13.

A display example is shown in b of FIG. 13 of the case where the imaging apparatus 100 is mounted on the right side position on the display surface of the input-output unit 240. Note that, the example shown in b of FIG. 13 is similar to that of a of FIG. 13, other than the point of the display positions of the live view image 330 and the plurality of operation objects 301 through to 306 being changed. Accordingly, it will be shown by attaching reference numerals the same as those of a of FIG. 13. Further, a display example is shown in b of FIG. 14 which corresponds to b of FIG. 13.

### [Operation example of the information processing apparatus]

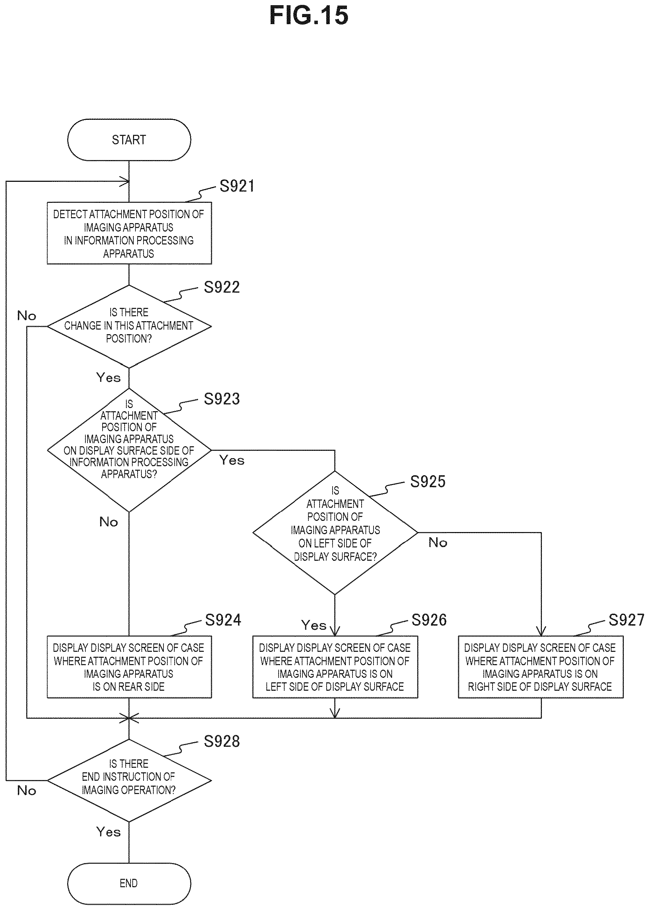

FIG. 15 is a flow chart which shows an example of a process procedure of a display control process by the information processing apparatus 200 in the second embodiment of the present technology. An example is shown in FIG. 15 where a display state of the input-output unit 240 is switched, based on the position where the imaging apparatus 100 is mounted on the information processing apparatus 200. Further, an example is shown in FIG. 15 in the case where it is decided that the imaging apparatus 100 is mounted on the information processing apparatus 200.

First, the control unit 250 detects an attachment position of the imaging apparatus 100 in the information processing apparatus 200 (step S921). This detection method of an attachment position can use any of the above described methods.

To continue, the control unit 250 decides whether or not a change has occurred in the attachment position of the imaging apparatus 100 in the information processing apparatus 200 (step S922). The case where a change has occurred in this attachment position means, for example, the case where this attachment position has moved on the display surface of the input-output unit 240, or the case where this attachment position has changed to another surface (for example, the case where moved to the surface on the opposite side, from the surface on which the input-output unit 240 is installed). Then, in the case where a change has not occurred in this attachment position (step S922), it proceeds to step S928.

Further, in the case where a change has occurred in this attachment position (step S922), the control unit 250 decides whether or not the attachment position of the imaging apparatus 100 is on the display surface of the information processing apparatus 200 (the surface of the input-output unit 240) (step S923). Then, in the case where the attachment position of the imaging apparatus 100 is not on the display surface of the information processing apparatus 200 (step S923), the control unit 250 causes a display screen of the case where the attachment position of the imaging apparatus 100 is on the rear side of the information processing apparatus 200 to be displayed in the input-output unit 240 (step S924). For example, the display screen shown in a of FIG. 12 is displayed in the input-output unit 240.

In the case where the attachment position of the imaging apparatus 100 is on the display surface of the information processing apparatus 200 (step S923), the control unit 250 decides whether or not the attachment position of the imaging apparatus 100 is on the left side on the display surface of the input-output unit 240 (step S925).

In the case where the attachment position of the imaging apparatus 100 is on the left side on the display surface of the input-output unit 240 (step S925), the control unit 250 causes a display screen of the case where the attachment position of the imaging apparatus 100 is on the left side on the display surface of the input-output unit 240 to be displayed in the input-output unit 240 (step S926). For example, the display screen shown in a of FIG. 14 is displayed in the input-output unit 240.

In the case where the attachment position of the imaging apparatus 100 is on the right side on the display surface of the input-output unit 240 (step S925), the control unit 250 causes a display screen of the case where the attachment position of the imaging apparatus 100 is on the right side on the display surface of the input-output unit 240 to be displayed in the input-output unit 240 (step S927). For example, the display screen shown in b of FIG. 14 is displayed in the input-output unit 240.

Note that, in the second embodiment of the present technology, an example has been shown where it is determined which of both sides on the display surface of the input-output unit 240 (the left side, the right side), as an attachment position of the imaging apparatus 100. However, for example, it may be determined which out of 3 or more regions on the display surface of the input-output unit 240, as an attachment position of the imaging apparatus 100. In this case, a live view image and operation objects are displayed, so as to avoid the attachment position of the imaging apparatus 100.

### <3. Third embodiment

In the first and the second embodiments of the present technology, examples have been shown where a display state of a display screen is switched based on a distance between an imaging apparatus and an information processing apparatus, and an attachment position of an imaging apparatus. Here, it is possible for the information processing apparatus shown in the first and the second embodiments of the present technology to switch a display state of a display screen based on the posture of the information processing apparatus, such as described above. For example, a display state of a display screen can be switched, in accordance with whether the information processing apparatus is in a horizontally long condition (a condition where the longer direction of the information processing apparatus becomes approximately parallel with a horizontal direction), or a vertically long condition (a condition where the longer direction of the information processing apparatus becomes approximately parallel with a vertical direction). However, for example, in the case where an imaging operation is performed in a condition where the imaging apparatus is mounted on the information processing apparatus, it is assumed that the use states of the imaging apparatus and the information processing apparatus will be different compared to the case where an imaging operation is performed in a condition where the imaging apparatus and the information processing apparatus are separated. Accordingly, in the case where an imaging operation is performed by using an imaging apparatus and an information processing apparatus, it will be important to provide an appropriate user interface in accordance with these use states.

Accordingly, in a third embodiment of the present technology, an example is shown where switching of a display state is controlled based on a change in the posture of an information processing apparatus, based on the presence or absence of mounting of an imaging apparatus and an information processing apparatus.

### [Function configuration example of the imaging apparatus and the information processing apparatus]

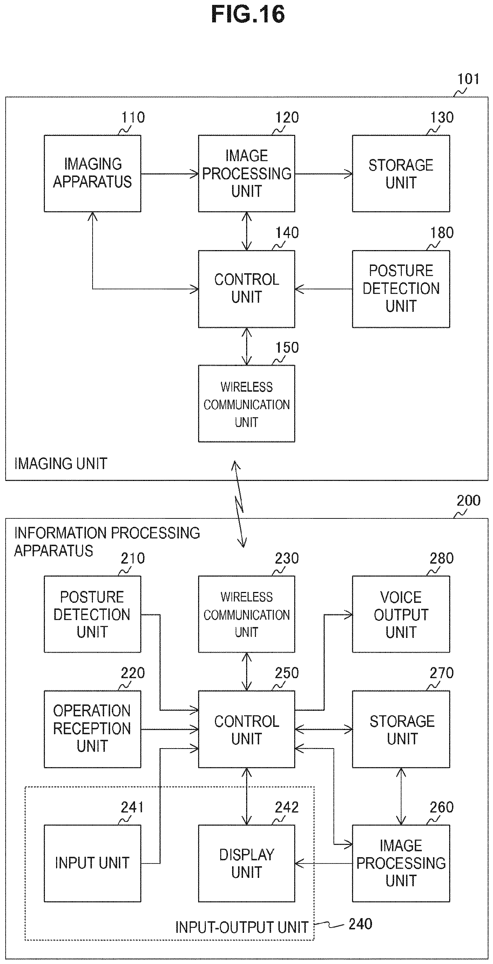

FIG. 16 is a block diagram which shows a function configuration example of an imaging apparatus 101 and an information processing apparatus 200 in the third embodiment of the present technology. Note that, the information processing apparatus 200 is similar to the information processing apparatus 200 shown in FIG. 4. Further, the imaging apparatus 101 is a modified example of the imaging apparatus 100 shown in FIG. 4. Accordingly, a part of these descriptions will be omitted, for the portions in common with the imaging apparatus 100 and the information processing apparatus 200 shown in FIG. 4, by attaching the same reference numerals.

The imaging apparatus 101 includes a posture detection unit 180.

The posture detection unit 180 detects a change in the posture of the imaging apparatus 101 by detecting an acceleration, movement, inclination or the like of the imaging apparatus 101, and outputs posture information related to the detected change in posture to the control unit 140. For example, the posture detection unit 180 can detect a rotation angle, in the case where an optical axis direction of the imaging apparatus 101 is set to a rotation axis, as a change in the posture of the imaging apparatus 101. Note that, various types of sensors such as a gyro sensor or an acceleration sensor can be used, for example, as the posture detection unit 180.

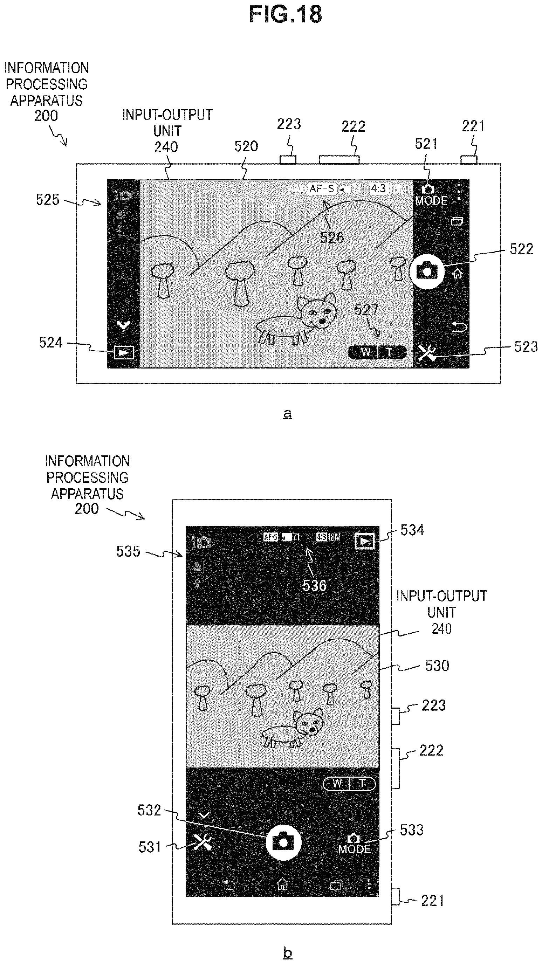

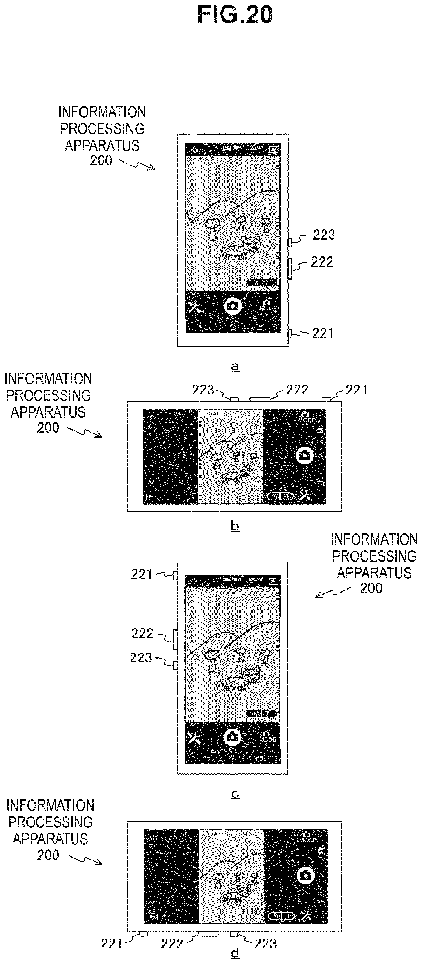

The control unit 140 transmits the posture information output from the posture detection unit 180 to the information processing apparatus 200 via the wireless communication unit 150. In this way, the control unit 250 of the information processing apparatus 200 can comprehend the posture of the imaging apparatus 101. Accordingly, in the case where an image generated by the imaging unit 110 is displayed in the input-output unit 240 as a live view image, for example, the control unit 250 can change this display state, based on the posture of the imaging apparatus 101. This change example of a display state will be shown in FIG. 18 through to FIG. 20.

### [Example where the mounting of the imaging apparatus is detected by using short-distance wireless communication]

Here, another detection method other than the above described detection method of mounting will be described. For example, the mounting to the information processing apparatus 200 of the imaging apparatus 101 can be detected by using short-distance wireless communication. Here, an example will be shown which uses Near Field Communication (NFC) as short-distance wireless communication.

For example, in NFC, regular communication is performed between apparatuses. For example, a regular Polling Command is issued from the information processing apparatus 200. This Polling Command is a command for distinguishing an NFC Tag specified by an NFC specification (for example, refer to NFC Forum Type3 Tag Operation Specification NFC Forum-TS-Type-3-Tag_1.1).

For example, in the case where there is a response (Polling Responce) to a regularly issued Polling Command, the information processing apparatus 200 can decide that an adjoining apparatus is present. Here, the distance at which data communication using NFC becomes possible is approximately 1 through to 10 cm. Accordingly, in the case where there is a Polling Responce, the control unit 250 of the information processing apparatus 200 can decide that the imaging apparatus 101 has been mounted on the information processing apparatus 200.

Further, in the case where there is no response (Polling Responce) to a Polling Command, the information processing apparatus 200 can decide that an adjoining apparatus is not present. In this case, the control unit 250 of the information processing apparatus 200 can decide that the imaging apparatus 101 is not mounted on the information processing apparatus 200.

Here, NFC is widespread. Further, NFC is often included in an information processing apparatus such as a smartphone. Accordingly, in the case of an information processing apparatus which includes NFC, by performing a detection of mounting using NFC, it may not be necessary to newly install hardware for performing this detection. In this way, the manufacturing cost of an information processing apparatus can be reduced.

Here, for example, it is assumed to be a case such as an imaging apparatus and an information processing apparatus are adjoining, without the imaging apparatus being mounted on the information processing apparatus. In such a case, when performing a mounting detection by using short-distance wireless communication other than NFC, there will the possibility that an erroneous detection is made when the imaging apparatus is mounted. Accordingly, in the embodiments of the present technology, NFC will be used as short-distance wireless communication. In this way, the accuracy of a mounting detection of an imaging apparatus can be improved.

### [Example where the mounting of the imaging apparatus is detected by using a Check Command and a Check Responce]

Heretofore, an example has been shown where the mounting of an imaging apparatus is detected by using NFC. In this way, in the case where the mounting of an imaging apparatus is detected by using NFC, the mounting of the imaging apparatus may be detected by using a Check Command and a Check Responce.

For example, in the case where an exchange of a Check Command and a Check Responce is performed, and specific information is included in the Check Responce, it can be decided that the imaging apparatus 101 is mounted on the information processing apparatus 200. Here, specific information is information (identification information) for specifying the imaging apparatus 101. Further, a check command and a check response are commands for reading a content of an NFC tag. These commands are defined in an NFC Forum Type3 Tag Operation Specification.

For example, an issue of a Polling Command, and an exchange of a response (Polling Responce) to the Polling Command, are performed, such as described above.

Then, when the Polling Responce is received, the control unit 250 of the information processing apparatus 200 transmits a Check Command. When this Check Command is received, the control unit 140 of the imaging apparatus 101 transmits a response (Check Responce) to the Check Command. In this case, the control unit 140 of the imaging apparatus 101 performs transmission by including specific information (information (identification information) for specifying the imaging apparatus 101) in the Check Responce.

For example, it can be transmitted by including information representing [ABC DSC/Lens-Style Camera] in the Check Responce as specific information. Here, for example, [ABC] is information showing a company name which manufactures the imaging apparatus 101, and [DSC] is information showing that it is an imaging apparatus. Further, [Lens-Style Camera] is information showing that it is a lens-style camera.

In this way, the control unit 140 of the imaging apparatus 101 performs transmission by including specific information in the Check Responce. In this way, the information processing apparatus 200 receiving the Check Responce can comprehend that the apparatus transmitting the Check Responce is the imaging apparatus 101, based on the specific information included in the Check Responce. That is, it can be comprehended that the apparatus transmitting the Check Responce is a lens-style camera (imaging apparatus 101) made by [AAA] company.

When the Check Responce is received, the control unit 250 of the information processing apparatus 200 acquires a content of the Check Responce. To continue, the control unit 250 of the information processing apparatus 200 decides whether or not specific information is included in the Check Responce. Then, in the case where specific information is included in the Check Responce, the control unit 250 of the information processing apparatus 200 determines that the imaging apparatus 101 is mounted. On the other hand, in the case where specific information is not included in the Check Responce, the control unit 250 of the information processing apparatus 200 determines that the imaging apparatus 101 is not mounted.

Note that, this detection method is an example, and is not limited to this, and another detection method may be used.

### [Relationship example between the posture of the imaging apparatus and a captured image]

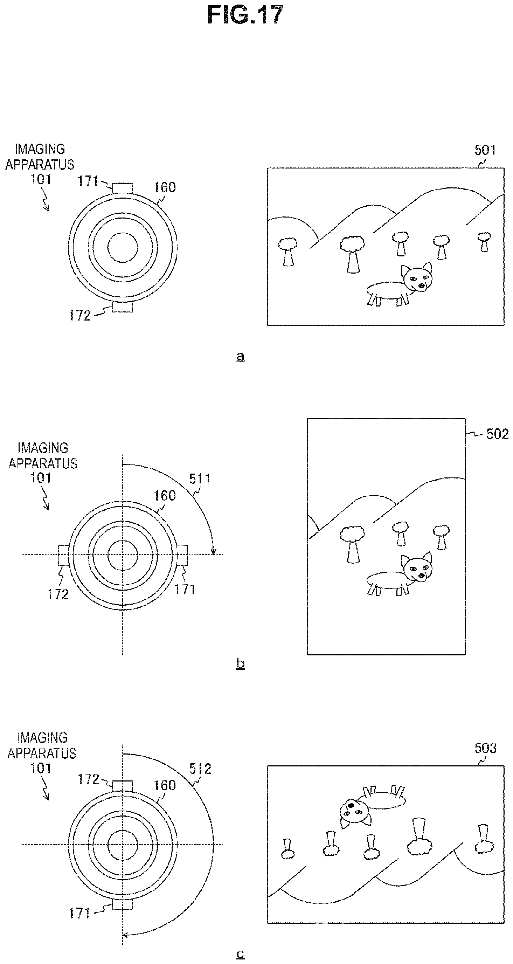

FIG. 17 is a figure which shows a relationship example between the posture of the imaging apparatus 101 and a captured image generated by the imaging unit 110 in the third embodiment of the present technology.

A captured image 501 is shown in a of FIG. 17 which is generated by the imaging unit 110 in the case where the imaging apparatus 101 is a usual posture. Here, a usual posture means, for example, a posture where the attachment member 171 becomes the upper part of a vertical direction, and the attachment member 172 becomes the lower part of a vertical direction, such as shown in a of FIG. 17 (a and b of FIG. 1). In this way, in the case where the posture of the imaging apparatus 101 is a usual posture, a captured image 501 with a horizontally long shape (a shape long in a horizontal direction) is generated.

A captured image 502 is shown in b of FIG. 17 which is generated by the imaging unit 110, in the case where the imaging apparatus 101 with the posture shown in a of FIG. 17 is rotated 90 degrees, by setting an optical axis direction of the imaging apparatus 101 to a rotation axis. That is, it shows a captured image 502 generated by the imaging unit 110 in the case where the imaging apparatus 101 with the posture shown in a of FIG. 17 is rotated 90 degrees in the direction of an arrow 511. In this case, a captured image 502 with a vertically long shape (a shape long in a vertical direction) is generated.

A captured image 503 is shown in c of FIG. 17 which is generated by the imaging unit 110, in the case where the imaging apparatus 101 with the posture shown in a of FIG. 17 is rotated 180 degrees, by setting an optical axis direction of the imaging apparatus 101 to a rotation axis. That is, it shows a captured image 503 generated by the imaging unit 110 in the case where the imaging apparatus 101 with the posture shown in a of FIG. 17 is rotated 180 degrees in the direction of an arrow 512. In this case, a captured image 503 with a horizontally long shape (a shape long in a horizontal direction) is generated. However, a photographic subject included in the captured image 503 becomes the photographic subject included in the captured image 501 shown in a of FIG. 17 that is rotated 180 degrees.

### [Transition example of a live view image and operation objects]

FIG. 18 is a figure which shows a transition example of a live view image and operation objects displayed in the input-output unit 240 in the third embodiment of the present technology. An example is shown in FIG. 18 where a captured image generated by the imaging unit 110, in the case where the imaging apparatus 101 is set so as to become the posture shown in a of FIG. 17, is displayed as a live view image.

A display example is shown in a of FIG. 18 of a live view image 520 and operation objects 521 through to 527 in the case where the longer direction of the information processing apparatus 200 becomes approximately the same as a horizontal direction (a direction perpendicular to the direction of gravity). Further, a display example is shown in b of FIG. 18 of a live view image 530 and operation objects 531 through to 537 in the case where the longer direction of the information processing apparatus 200 becomes approximately the same as a vertical direction (a direction parallel to the direction of gravity). Note that, the operation objects 521 through to 524, 526, and 527 shown in a of FIG. 18, and the operation objects 531 through to 534, 536, and 537 shown in b of FIG. 18, correspond to the operation objects 311 through to 315, and 317 shown in a and b of FIG. 8. Further, the operation object 525 shown in a of FIG. 18 and the operation object 535 shown in b of FIG. 18 correspond to the operation objects 305 and 306 shown in a and b of FIG. 7.

The control unit 250 decides the posture of the information processing apparatus 200, based on posture information output from the posture detection unit 210. Then, in the case where the longer direction of the information processing apparatus 200 becomes approximately the same as a horizontal direction, such as shown in a of FIG. 18, the control unit 250 causes the live view image 520 and the operation objects 521 through to 527 to be displayed. On the other hand, in the case where the longer direction of the information processing apparatus 200 becomes approximately the same as a vertical direction, such as shown in b of FIG. 18, the control unit 250 causes the live view image 530 and the operation objects 531 through to 537 to be displayed. In this case, the control unit 250 compresses the live view image 520 and causes it to be displayed as the live view image 530, so that the horizontal width of the live view image 520 shown in a of FIG. 18 (the size of a horizontal direction) matches the display surface of the input-output unit 240.

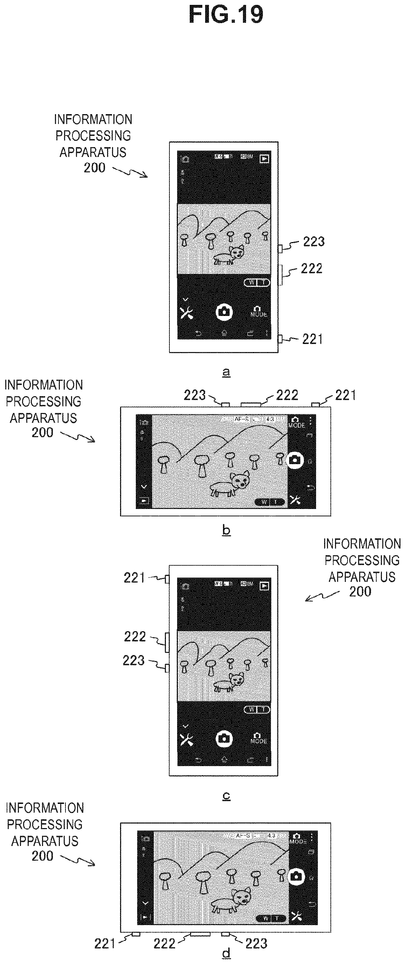

Further, a display example is shown in d of FIG. 19 in the case where the information processing apparatus 200 shown in a of FIG. 18 is rotated 180 degrees by setting an axis orthogonal to the display surface of the input-output unit 240 to a rotation axis. Further, a display example is shown in c of FIG. 19 in the case where the information processing apparatus 200 shown in b of FIG. 18 is rotated 180 degrees by setting an axis orthogonal to the display surface of the input-output unit 240 to a rotation axis.

### [Display example of the display screen]

FIG. 19 and FIG. 20 are figures which show display examples of a display screen displayed in the input-output unit 240 in the third embodiment of the present technology. Display examples are shown in FIG. 19 and FIG. 20 of a display screen in the case where the imaging apparatus 101 is not mounted on the information processing apparatus 200.

Transition examples are shown in a through to d of FIG. 19 of a display screen where a captured image generated by the imaging unit 110, in the case where the imaging apparatus 101 is set so as to become the posture shown in a of FIG. 17, is displayed as a live view image. In this case, a live view image is displayed, so that an up-down direction of the imaging apparatus 101, and an up-down direction of the live view image displayed in the input-output unit 240 of the information processing apparatus 200, become the same. Here, an up-down direction of the imaging apparatus 101 means the direction which connects the attachment members 171 and 172, and a left-right direction of the imaging apparatus 101 means, for example, the direction orthogonal to this up-down direction. Note that, a of FIG. 19 corresponds to b of FIG. 18, and b of FIG. 19 corresponds to a of FIG. 18.

For example, as shown in a through to d of FIG. 19, the posture of the information processing apparatus 200 is changed by rotating the information processing apparatus 200 by setting an orthogonal direction, which is orthogonal to the display surface in the input-output unit 240 of the information processing apparatus 200, to a rotation axis. In this way, in the case where the posture of the information processing apparatus 200 is changed, a display state of the live view image displayed in the input-output unit 240 is changed, so that an up-down direction of the imaging apparatus 101 and an up-down direction of the live view image become the same, based on this change in the posture. Further, a display state of each operation object is changed, based on the change in posture of the information processing apparatus 200.

Further, it becomes similar to the transition example of a display screen shown in a through to d of FIG. 19, even in the case where a captured image generated by the imaging unit 110, in the case where the imaging apparatus 101 is set so as to become the posture shown in c of FIG. 17, is displayed as a live view image. In this case, a live view image is displayed, so that the upper side of an up-down direction of the imaging apparatus 101, and the upper side of an up-down direction of the live view image displayed in the input-output unit 240 of the information processing apparatus 200, become opposite. That is, even in the case where the imaging apparatus 101 is set with either of the postures of a and c of FIG. 17, a live view image can be displayed, so that an up-down direction of a photographic subject included in the live view image becomes correct, in the input-output unit 240 of the information processing apparatus 200.

Transition examples are shown in a through to d of FIG. 20 of a display screen where a captured image generated by the imaging unit 110, in the case where the imaging apparatus 101 is set so as to become the posture shown in b of FIG. 17, is displayed as a live view image. In this case, a live view image is displayed, so that a left-right direction of the imaging apparatus 101, and an up-down direction of the live view image displayed in the input-output unit 240 of the information processing apparatus 200, become the same.

For example, similar to the example shown in a through to d of FIG. 19, in the case where the posture of the information processing apparatus 200 is changed, a display state of the live view image is changed, so that a left-right direction of the imaging apparatus 101 and an up-down direction of the live view image become the same, based on this change in posture. Further, a display state of each operation object is changed, based on the change in posture of the information processing apparatus 200.

Further, it becomes similar to the transition example of the display screen shown in FIG. 20, even in the case where a captured image generated by the imaging unit 110, in the case where the imaging apparatus 101 with the posture shown in b of FIG. 17 is rotated 180 degrees, is displayed as a live view image, by setting an optical axis direction of the imaging apparatus 101 to a rotation axis. That is, even in the case where it is set by rotating the imaging apparatus 101 90 degrees (for example, in the case where the imaging apparatus 101 is set with the posture shown in b of FIG. 17), a live view image can be displayed so that an up-down direction of a photographic subject included in the live view image becomes correct.

In this way, in the case where the imaging apparatus 101 is not mounted on the information processing apparatus 200, a display state of a live view image and operation objects can be changed, based on a change in the posture of the information processing apparatus 200. However, in the case where the imaging apparatus 101 is mounted on the information processing apparatus 200, it is assumed that a user is holding the imaging apparatus 101 and the information processing apparatus 200 with the same way of holding, even if the imaging apparatus 101 and the information processing apparatus 200 have some posture. Accordingly, when a display state of a live view image and operation objects is changed, based on a change in the posture of the information processing apparatus 200, it is assumed that it will be difficult for a user to operate. Accordingly, in the third embodiment of the present technology, in the case where the imaging apparatus 101 is mounted on the information processing apparatus 200, a change of a display state of a live view image and operation objects is not performed based on a change in the posture of the information processing apparatus 200.

### [Display example at the time of imaging apparatus mounting]

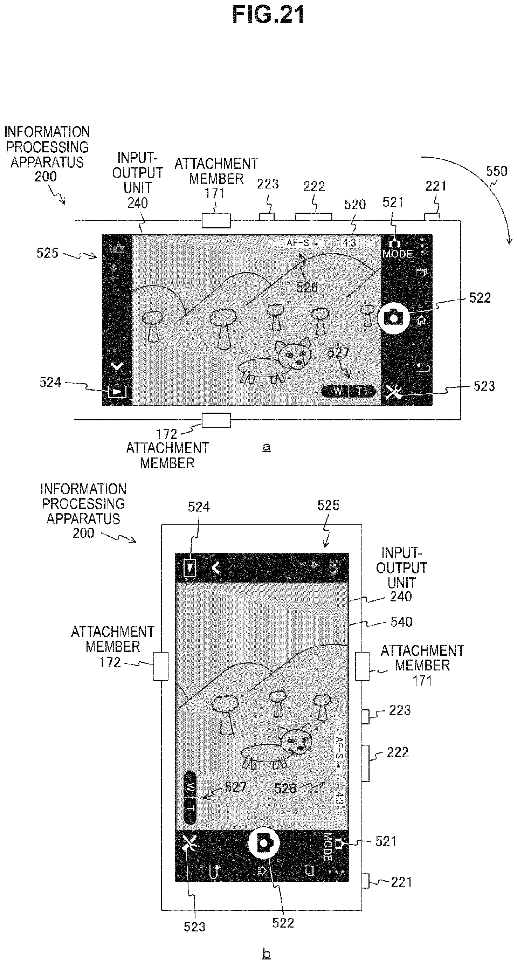

FIG. 21 is a figure which shows a display example of a display screen displayed in the input-output unit 240 in the third embodiment of the present technology. A display example is shown in FIG. 21 of a display screen in the case where the imaging apparatus 101 is mounted on the information processing apparatus 200. Further, a display example is shown in FIG. 21 of a display screen in the case where a user performs each of the operations of the imaging apparatus 101 by using operation objects displayed in the input-output unit 240.

The example shown in a of FIG. 21 is similar to that of a of FIG. 18, other than the point where the attachment members 171 and 172 are mounted on the information processing apparatus 200. Accordingly, it will be shown by attaching the same reference numerals to the portions in common with a of FIG. 18.

A display example is shown in b of FIG. 21 in the case where the information processing apparatus 200 shown in a of FIG. 21 is rotated 90 degrees by setting an axis orthogonal to the display surface of the input-output unit 240 to a rotation axis (the case where rotated 90 degrees in the direction of an arrow 550). Note that, the example shown in b of FIG. 21 is similar to that of a of FIG. 21, other than the point where a live view image 540 is displayed instead of the live view image 520. Accordingly, it will be shown by attaching the same reference numerals to the portions in common with a of FIG. 21.

In this way, in the case where the imaging apparatus 101 is mounted on the information processing apparatus 200, a display state of operation objects displayed in the input-output unit 240 is not changed, even in the case where the posture of the information processing apparatus 200 is changed. In this way, operation objects are displayed with the same display state regardless of the posture of the imaging apparatus 101 and the information processing apparatus 200.

Further, in the case where the imaging apparatus 101 is mounted on the information processing apparatus 200, a display state of a live view image displayed in the input-output unit 240 is not changed, even in the case where the posture of the imaging apparatus 101 is changed. In this way, a live view image can be confirmed with the same display state regardless of the posture of the imaging apparatus 101 and the information processing apparatus 200.

For example, it is assumed to be a case where a user who is holding the imaging apparatus 101 and the information processing apparatus 200 performs an operation (zoom operation) of an operation object 527 with the thumb of his or her right hand, in the condition shown in a of FIG. 21. In this case, for example, a user who is holding the imaging apparatus 101 and the information processing apparatus 200 can perform an operation (zoom operation) of the operation object 527 with the thumb of his or her right hand, even in the case where it becomes the posture shown in b of FIG. 21. In this way, a user can easily perform a zoom operation with the thumb of his or her right hand, even at the time when the imaging apparatus 101 and the information processing apparatus 200 have some posture.

Further, for example, it is assumed to be a case where a user who is holding the imaging apparatus 101 and the information processing apparatus 200 performs an operation (shutter operation) of an operation object 522 with the thumb of his or her right hand, in the condition shown in a of FIG. 21. In this case, for example, a user who is holding the imaging apparatus 101 and the information processing apparatus 200 can perform an operation (shutter operation) of the operation object 522 with the thumb of his or her right hand, even in the case where it becomes the posture shown in b of FIG. 21. In this way, a user can easily perform a shutter operation with the thumb of his or her right hand, even at the time when the imaging apparatus 101 and the information processing apparatus 200 have some posture.

In this way, at the time of the mounting of the imaging apparatus 101 and the information processing apparatus 200, a display state of operation objects and a live view image displayed in the input-output unit 240 is not changed. In this way, it can prevent a user sensing that it is difficult to operate, by having the position of operation objects for performing a zoom operation or a shutter operation changed, every time the posture of the information processing apparatus 200 changes. Further, it can prevent a user sensing that it is difficult to confirm a photographic subject, by having a live view image changed, every time the posture of the information processing apparatus 200 changes. That is, the operativeness can be improved at the time of an imaging operation.

Note that, here, an example has been shown where a display state of all operation objects is not changed, at the time of the mounting of the imaging apparatus 101 and the information processing apparatus 200. However, a display state of a part of the operation objects (for example, operation objects not particularly used during an imaging operation) may change, at the time of the mounting of the imaging apparatus 101 and the information processing apparatus 200. In this case, the other operation objects (for example, operation objects frequently used during an imaging operation) are not changed. Further, for example, at least 1 operation object may have only this orientation changed, without changing this position. For example, the operation object 522 may have this orientation changed based on a change in the posture of the information processing apparatus 200, without changing the position on the display surface of the input-output unit 240. For example, it may be changed so that a camera mark of the operation object 522 becomes upwards, based on a change in the posture of the information processing apparatus 200. Further, a user may set the presence or absence of a change of a display state of an operation object for each operation object, and the presence or absence of a change may be decided based on this setting content.

### [Operation example of the information processing apparatus]

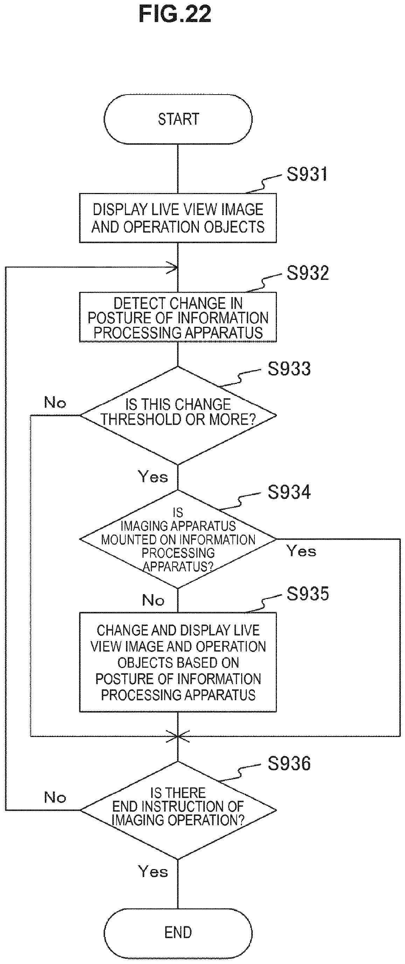

FIG. 22 is a flow chart which shows an example of a process procedure of a display control process by the information processing apparatus 200 in the third embodiment of the present technology. An example is shown in FIG. 22 for controlling whether or not switching of a display state is performed based on a change in the posture of the information processing apparatus 200, based on the presence or absence of mounting of the imaging apparatus 101 and the information processing apparatus 200.

First, the control unit 250 causes a display screen which includes a live view image and operation objects to be displayed in the input-output unit 240 (step S931). For example, the display screen shown in a of FIG. 18 is displayed in the input-output unit 240.

To continue, the control unit 250 detects a change in the posture of the information processing apparatus 200, based on posture information from the posture detection unit 210 (step S932). Then, the control unit 250 decides whether or not this change is a threshold or more (step S933). For example, as shown in FIG. 18 through to FIG. 20, in the case where rotated a prescribed angle or more by setting an axis orthogonal to the display surface of the input-output unit 240 to a rotation axis, it is decided that this change is a threshold or more. Then, in the case where this change is less than a threshold (step S933), it proceeds to step S936.

Further, in the case where this change is a threshold or more (step S933), the control unit 250 decides whether or not the imaging apparatus 101 is mounted on the information processing apparatus 200 (step S934). Then, in the case where the imaging apparatus 101 is mounted on the information processing apparatus 200 (step S934), it proceeds to step S936. Further, in the case where the imaging apparatus 101 is not mounted on the information processing apparatus 200 (step S934), the control unit 250 changes the live view image and the operation objects and causes them to be displayed in the input-output unit 240, based on the posture of the information processing apparatus 200 (step S935). For example, as shown in FIG. 18 through to FIG. 20, the live view image and the operation objects are changed and displayed in the input-output unit 240.

To continue, the control unit 250 decides whether or not there is an end instruction of the imaging operation (step S936), and in the case where there is no end instruction of the imaging operation, it returns to step S931, and in the case where there is an end instruction of the imaging operation, the operation of the display control process ends.

In this way, the control unit 250 causes a display screen which includes operation objects for operating the imaging apparatus 101 to be displayed in the input-output unit 240. Also, in the case where the imaging apparatus 101 is not mounted on the information processing apparatus 200, the control unit 250 performs a control for changing a display state of a live view image and operation objects based on a change in the posture of the information processing apparatus 200. On the other hand, in the case where the imaging apparatus 101 is mounted on the information processing apparatus 200, the control unit 250 performs a control so as not to change a display state of a live view image and operation objects based on a change in the posture of the information processing apparatus 200.

Note that, the display control processes shown in the first and the second embodiments of the present technology (switching a display state of a display screen based on a distance between an imaging apparatus and an information processing apparatus, and an attachment position of an imaging apparatus) may be performed in combination in the display control process shown in FIG. 22.

In this way, according to the embodiments of the present technology, an appropriate user interface corresponding to the use states of the imaging apparatuses 100 and 101 and the information processing apparatus 200 can be provided.

Further, the above described process procedures described in the embodiments may be handled as a method having this series of procedures, or may be handled as a program for causing a computer to execute this series of procedures and a recording medium storing this program. A Compact Disc (CD), a MiniDisc (MD), a Digital Versatile Disc (DVD), a memory card, a Blu-ray (registered trademark) Disc or the like can be used, for example, as this recording medium.

### Reference Signs List

- 100, 101: imaging apparatus
- 110: imaging unit
- 120: image processing unit
- 130: storage unit
- 140: control unit
- 150: wireless communication unit
- 160: lens barrel
- 171: attachment member
- 172: attachment member
- 175: mounting surface
- 180: posture detection unit
- 200: information processing apparatus
- 210: posture detection unit
- 220: operation reception unit
- 230: wireless communication unit
- 240: input-output unit
- 241: input unit
- 242: display unit
- 250: control unit
- 260: image processing unit
- 270: storage unit
- 280: voice output unit
- 291: light emitting unit
- 292: imaging unit

## Claims

1. An information processing apparatus (200), comprising:
a control unit (250) which performs a control for switching a display state of a display screen for operating an imaging apparatus (100, 101) based on a relative position relationship with the imaging apparatus,
wherein the control unit performs a control for switching the display state of the display screen based on a distance between the information processing apparatus and the imaging apparatus, and
wherein when the distance between the imaging apparatus and the information processing apparatus is a threshold or more, the control unit is adapted to cause an over-threshold display screen to be displayed,
wherein when the distance between the imaging apparatus and the information processing apparatus is less than the threshold, the control unit causes an under-threshold display screen to be displayed,
wherein each of the over-threshold display screen and the under-threshold display screen comprise operation objects for operating the imaging apparatus, and
wherein a number, type or position of operation objects for performing an operation input on the display screen is dependent on the display state.

2. The information processing apparatus according to claim 1,
wherein the control unit performs a control for switching a display state of the display screen based on whether or not the imaging apparatus is mounted on the information processing apparatus.

3. The information processing apparatus according to claim 2,
wherein the control unit performs a control for switching a display state of the display screen based on whether or not the imaging apparatus is mounted on a display surface of the information processing apparatus.

4. The information processing apparatus according to claim 1,
wherein the control unit causes the display screen which includes an operation object for operating the imaging apparatus to be displayed, and performs a control for changing a display state of the operation object based on the relative position relationship.

5. The information processing apparatus according to claim 1,
wherein the control unit causes the display screen which includes an operation object for operating the imaging apparatus to be displayed, and performs a control, in the case where the imaging apparatus is not mounted on the information processing apparatus, for changing a display state of the operation object based on a change in a posture of the information processing apparatus, and in the case where the imaging apparatus is mounted on the information processing apparatus, for not changing a display state of the operation object based on a change in a posture of the information processing apparatus.

6. An imaging system, comprising:
the information processing apparatus according to any of claims 1-3; and
an imaging apparatus in which a control related to an imaging operation is performed based on an operation input performed in the information processing apparatus by connecting the imaging apparatus to the information processing apparatus by using wireless communication.

7. A control method of an information processing apparatus which performs a control for switching a display state of a display screen for operating an imaging apparatus based on a relative position relationship with the imaging apparatus,
wherein the control unit performs a control for switching the display state of the display screen based on a distance between the information processing apparatus and the imaging apparatus, and
wherein when the distance between the imaging apparatus and the information processing apparatus is a threshold or more, the control unit is adapted to cause an over-threshold display screen to be displayed,
wherein when the distance between the imaging apparatus and the information processing apparatus is less than the threshold, the control unit causes an under-threshold display screen to be displayed,
wherein each of the over-threshold display screen and the under-threshold display screen comprise operation objects for operating the imaging apparatus, and
wherein a number, type or position of operation objects for performing an operation input on the display screen is dependent on the display state.

8. A program for causing a computer to perform the method of claim 7.

## Patentansprüche

1. Informationsverarbeitungsvorrichtung (200), umfassend:
eine Steuereinheit (250), die eine Steuerung zum Umschalten eines Anzeigezustands eines Anzeigebildschirms zum Betreiben einer Bildgebungsvorrichtung (100, 101) basierend auf einer relativen Positionsbeziehung mit der Bildgebungsvorrichtung durchführt,
wobei die Steuereinheit eine Steuerung zum Umschalten des Anzeigezustands des Anzeigebildschirms basierend auf einem Abstand zwischen der Informationsverarbeitungsvorrichtung und der Bildgebungsvorrichtung durchführt, und
wobei, wenn der Abstand zwischen der Bildgebungsvorrichtung und der Informationsverarbeitungsvorrichtung ein Schwellenwert oder größer ist, die Steuereinheit angepasst ist, um einen Anzeigebildschirm mit Überschwellenwert zu veranlassen, angezeigt zu werden,
wobei, wenn der Abstand zwischen der Bildgebungsvorrichtung und der Informationsverarbeitungsvorrichtung kleiner als der Schwellenwert ist, die Steuereinheit einen Anzeigebildschirm mit Unterschwellenwerts veranlasst, angezeigt zu werden,
wobei sowohl der Anzeigebildschirm mit Überschwellenwert als auch der Anzeigebildschirm mit Unterschwellenwert Betriebsobjekte zum Betreiben der Bildgebungsvorrichtung umfassen, und
wobei eine Anzahl, ein Typ oder eine Position von Betriebsobjekten zum Durchführen einer Betriebseingabe auf dem Anzeigebildschirm von dem Anzeigezustand abhängig ist.

2. Informationsverarbeitungsvorrichtung nach Anspruch 1,
wobei die Steuereinheit eine Steuerung zum Umschalten eines Anzeigezustands des Anzeigebildschirms durchführt, basierend darauf, ob die Bildgebungsvorrichtung an der Informationsverarbeitungsvorrichtung angebracht ist oder nicht.

3. Informationsverarbeitungsvorrichtung nach Anspruch 2,
wobei die Steuereinheit eine Steuerung zum Umschalten eines Anzeigezustands des Anzeigebildschirms durchführt, basierend darauf, ob die Bildgebungsvorrichtung auf einer Anzeigefläche der Informationsverarbeitungsvorrichtung angebracht ist oder nicht.

4. Informationsverarbeitungsvorrichtung nach Anspruch 1,
wobei die Steuereinheit den Anzeigebildschirm, der ein Betriebsobjekt zum Betreiben der Bildgebungsvorrichtung beinhaltet, veranlasst, angezeigt zu werden, und eine Steuerung zum Verändern eines Anzeigezustands des Betriebsobjekts basierend auf der relativen Positionsbeziehung durchführt.

5. Informationsverarbeitungsvorrichtung nach Anspruch 1,
wobei die Steuereinheit den Anzeigebildschirm, der ein Betriebsobjekt zum Betreiben der Bildgebungsvorrichtung enthält, veranlasst, angezeigt zu werden, und eine Steuerung in dem Fall durchführt, in dem die Bildgebungsvorrichtung nicht an der Informationsverarbeitungsvorrichtung angebracht ist, um einen Anzeigezustand des Betriebsobjekts basierend auf einer Änderung in einer Haltung der Informationsverarbeitungsvorrichtung zu verändern, und in dem Fall, in dem die Bildgebungsvorrichtung an der Informationsverarbeitungsvorrichtung angebracht ist, um einen Anzeigezustand des Betriebsobjekts basierend auf einer Änderung in einer Haltung der Informationsverarbeitungsvorrichtung nicht zu verändern.

6. Bildgebungssystem, umfassend:
die Informationsverarbeitungsvorrichtung nach einem der Ansprüche 1-3; und
eine Bildgebungsvorrichtung, in der eine auf eine Bildgebungsoperation bezogene Steuerung basierend auf einer in der Informationsverarbeitungsvorrichtung durchgeführten Operationseingabe durch Verbinden der Bildgebungsvorrichtung mit der Informationsverarbeitungsvorrichtung unter Verwendung drahtloser Kommunikation durchgeführt wird.

7. Steuerungsverfahren einer Informationsverarbeitungsvorrichtung, das eine Steuerung zum Umschalten eines Anzeigezustands eines Anzeigebildschirms zum Betreiben einer Bildgebungsvorrichtung basierend auf einer relativen Positionsbeziehung mit der Bildgebungsvorrichtung durchführt,
wobei die Steuereinheit eine Steuerung zum Umschalten des Anzeigezustands des Anzeigebildschirms basierend auf einem Abstand zwischen der Informationsverarbeitungsvorrichtung und der Bildgebungsvorrichtung durchführt, und
wobei, wenn der Abstand zwischen der Bildgebungsvorrichtung und der Informationsverarbeitungsvorrichtung ein Schwellenwert oder mehr ist, die Steuereinheit angepasst ist, um einen Anzeigebildschirm mit Überschwellenwert zu veranlassen, angezeigt zu werden,
wobei, wenn der Abstand zwischen der Bildgebungsvorrichtung und der Informationsverarbeitungsvorrichtung kleiner als der Schwellenwert ist, die Steuereinheit einen Anzeigebildschirm mit Unterschwellenwert veranlasst, angezeigt zu werden,
wobei sowohl der Anzeigebildschirm mit Überschwellenwert als auch der Anzeigebildschirm mit Unterschwellenwert Betriebsobjekte zum Betreiben der Bildgebungsvorrichtung umfassen, und
wobei eine Anzahl, ein Typ oder eine Position von Betriebsobjekten zum Durchführen einer Betriebseingabe auf dem Anzeigebildschirm von dem Anzeigezustand abhängig ist.

8. Programm zum Veranlassen eines Computers, das Verfahren nach Anspruch 7 durchzuführen.

## Revendications

1. Appareil de traitement d'informations (200), comprenant :
une unité de commande (250) qui réalise une commande pour commuter un état d'affichage d'un écran d'affichage pour faire fonctionner un appareil d'imagerie (100, 101) sur la base d'une relation de position relative avec l'appareil d'imagerie,
l'unité de commande réalisant une commande pour commuter l'état d'affichage de l'écran d'affichage sur la base d'une distance entre l'appareil de traitement d'informations et l'appareil d'imagerie, et
lorsque la distance entre l'appareil d'imagerie et l'appareil de traitement d'informations est égale ou supérieure à un seuil, l'unité de commande étant adaptée pour provoquer l'affichage d'un écran d'affichage supérieur au seuil,
lorsque la distance entre l'appareil d'imagerie et l'appareil de traitement d'informations est inférieure au seuil, l'unité de commande provoquant l'affichage d'un écran d'affichage inférieur au seuil,
l'écran d'affichage supérieur au seuil et l'écran d'affichage inférieur au seuil comprenant chacun des objets de fonctionnement pour faire fonctionner l'appareil d'imagerie, et
un nombre, un type ou une position d'objets de fonctionnement pour réaliser une opération d'entrée sur l'écran d'affichage étant dépendant de l'état d'affichage.

2. Appareil de traitement d'informations selon la revendication 1,
l'unité de commande réalisant une commande pour commuter un état d'affichage de l'écran d'affichage sur la base du montage ou non de l'appareil d'imagerie sur l'appareil de traitement d'informations.

3. Appareil de traitement d'informations selon la revendication 2,
l'unité de commande réalisant une commande pour commuter un état d'affichage de l'écran d'affichage sur la base du fait que l'appareil d'imagerie est monté ou non sur une surface d'affichage de l'appareil de traitement d'informations.

4. Appareil de traitement d'informations selon la revendication 1, l'unité de commande provoquant l'affichage de l'écran d'affichage qui comprend un objet de fonctionnement pour faire fonctionner l'appareil d'imagerie, et réalisant une commande pour changer un état d'affichage de l'objet de fonctionnement sur la base de la relation de position relative.

5. Appareil de traitement d'informations selon la revendication 1,
l'unité de commande provoquant l'affichage de l'écran d'affichage qui comprend un objet de fonctionnement pour faire fonctionner l'appareil d'imagerie, et réalisant une commande, dans le cas où l'appareil d'imagerie n'est pas monté sur l'appareil de traitement d'informations, pour changer un état d'affichage de l'objet de fonctionnement sur la base d'un changement de posture de l'appareil de traitement d'informations, et dans le cas où l'appareil d'imagerie est monté sur l'appareil de traitement d'informations, pour ne pas changer un état d'affichage de l'objet de fonctionnement sur la base d'un changement de posture de l'appareil de traitement d'informations.

6. Système d'imagerie, comprenant :
l'appareil de traitement d'informations selon l'une quelconque des revendications 1 à 3 ; et
un appareil d'imagerie dans lequel une commande liée à une opération d'imagerie est réalisée sur la base d'une opération d'entrée dans l'appareil de traitement d'informations en connectant l'appareil d'imagerie à l'appareil de traitement d'informations au moyen d'une communication sans fil.

7. Procédé de commande d'un appareil de traitement d'informations qui réalise une commande de commutation d'un état d'affichage d'un écran d'affichage pour faire fonctionner un appareil d'imagerie sur la base d'une relation de position relative avec l'appareil d'imagerie,
l'unité de commande réalisant une commande pour commuter l'état d'affichage de l'écran d'affichage sur la base d'une distance entre l'appareil de traitement d'informations et l'appareil d'imagerie, et
lorsque la distance entre l'appareil d'imagerie et l'appareil de traitement d'informations est égale ou supérieure à un seuil, l'unité de commande étant adaptée pour provoquer l'affichage d'un écran d'affichage supérieur au seuil,
lorsque la distance entre l'appareil d'imagerie et l'appareil de traitement d'informations est inférieure au seuil, l'unité de commande provoquant l'affichage d'un écran d'affichage inférieur au seuil,
l'écran d'affichage supérieur au seuil et l'écran d'affichage inférieur au seuil comprenant chacun des objets de fonctionnement pour faire fonctionner l'appareil d'imagerie, et
un nombre, un type ou une position d'objets de fonctionnement pour réaliser une opération d'entrée sur l'écran d'affichage dépendant de l'état d'affichage.

8. Programme pour amener un ordinateur à réaliser le procédé selon la revendication 7.
